# EUROPÄISCHE PATENTSCHRIFT

(11) **EP 3 636 387 B1**
(45) Veröffentlichungstag und Bekanntmachung des Hinweises auf die Patenterteilung: **31.08.2022**
(21) Anmeldenummer: 19184628.6
(22) Anmeldetag: 05.07.2019
(51) Int. Cl.: B23B 31/20, B23Q 17/09, B23Q 17/24

(54) **AUTOMATISIERTE WERKZEUGSPANNVORRICHTUNG, WERKZEUGEINSTELL- UND/ODER WERKZEUGMESSGERÄT UND VERFAHREN MIT EINER AUTOMATISIERTEN WERKZEUGSPANNVORRICHTUNG**
AUTOMATED TOOL TENSIONING DEVICE, TOOL ADJUSTMENT AND/OR MEASUREMENT DEVICE AND METHOD WITH AN AUTOMATIC TOOL TENSIONING DEVICE
DISPOSITIF DE SERRAGE D'OUTIL AUTOMATISÉ, APPAREIL DE RÉGLAGE D'OUTIL ET / OU DE MESURE D'OUTIL ET PROCÉDÉ COMPRENANT UN DISPOSITIF DE SERRAGE D'OUTIL AUTOMATISÉ

(30) Priorität: 05.07.2018 DE 102018116263
(43) Veröffentlichungstag der Anmeldung: 15.04.2020
(73) Patentinhaber: E. Zoller GmbH & Co. KG, 74385 Pleidelsheim (DE)
(72) Erfinder: Zoller, Alexander, 74385 Pleidelsheim (DE); Pfau, Christian, 74379 Ingersheim (DE); Huck, Florian, 71638 Ludwigsburg (DE)
(74) Vertreter: Daub, Thomas

(56) Entgegenhaltungen:
- WO-A1-2004/037486
- DE-T2- 69 300 950

## Beschreibung

Die Erfindung betrifft eine automatisierte Werkzeugspannvorrichtung nach dem Anspruch 1, ein Werkzeugeinstell- und/oder Werkzeugmessgerät nach dem Anspruch 14, ein Verfahren mit der automatisierten Werkzeugspannvorrichtung nach dem Anspruch 16 sowie Verfahren mit der automatisierten Werkzeugspannvorrichtung nach den Oberbegriffen der Ansprüche 17 und 19.

Es ist bereits eine manuelle Werkzeugspannvorrichtung, welche dazu vorgesehen ist, zumindest ein Werkzeug mittels eines Festziehens einer Überwurfmutter eines Werkzeugfutters in das Werkzeugfutter einzuspannen und/oder das Werkzeug mittels eines Lösens der Überwurfmutter aus dem Werkzeugfutter auszuspannen, vorgeschlagen worden. Aus der DE 693 00 950 T2 ist eine automatisierte Werkzeugspannvorrichtung nach dem Oberbegriff des Anspruchs 1 bekannt.

Die Aufgabe der Erfindung besteht insbesondere darin, eine gattungsgemäße Vorrichtung mit vorteilhaften Eigenschaften hinsichtlich eines Ein- und/oder Ausspannprozesses eines Werkzeugs in ein Werkzeugfutter und/oder aus einem Werkzeugfutter bereitzustellen. Die Aufgabe wird erfindungsgemäß durch die Merkmale der Patentansprüche 1, 14, 16, 17 und 19 gelöst, während vorteilhafte Ausgestaltungen und Weiterbildungen der Erfindung den Unteransprüchen entnommen werden können.

### Vorteile der Erfindung

Die Erfindung betrifft eine automatisierte Werkzeugspannvorrichtung, insbesondere eine vollautomatisierte Werkzeugspannvorrichtung, welche dazu vorgesehen ist, zumindest ein Werkzeug mittels eines Festziehens einer Überwurfmutter eines Werkzeugfutters in das Werkzeugfutter einzuspannen und/oder das Werkzeug mittels eines Lösens der Überwurfmutter aus dem Werkzeugfutter auszuspannen, mit einem Spannelement, welches zumindest dazu vorgesehen ist, eine Verbindung, insbesondere Klemmverbindung, mit der Überwurfmutter des Werkzeugfutters herzustellen und mit einem Drehmomentaufnahmeelement, welches zumindest dazu vorgesehen ist, zumindest einen Großteil eines während eines Werkzeugspannvorgangs, insbesondere während eines Werkzeugein- und/oder Werkzeugausspannvorgangs, auftretenden Drehmoments aufzunehmen.

Dadurch können insbesondere vorteilhafte Eigenschaften hinsichtlich eines Ein- und/oder Ausspannprozesses eines Werkzeugs, insbesondere eines Werkzeugs, welches eine formschlüssige Verbindung mit der Überwurfmutter und/oder vorzugsweise eine zumindest zu einem Teil, insbesondere zumindest zu einem Großteil, kraftschlüssige Klemmung einer Überwurfmutter zur Manipulation der Überwurfmutter bei einem Werkzeugein- und/oder Werkzeugausspannvorgang erfordert, in ein Werkzeugfutter und/oder aus einem Werkzeugfutter erreicht werden. Vorteilhaft kann ein hoher Grad an Automatisierung erreicht werden. Dadurch kann vorteilhaft eine hohe Taktfrequenz des Werkzeugein- und/oder Werkzeugausspannvorgangs erreicht werden, wodurch insbesondere eine hohe Effizienz erreicht werden kann. Zudem kann vorteilhaft ein Risiko einer Fehlbedienung reduziert werden. Außerdem kann vorteilhaft eine Arbeitsbelastung für einen Bediener verringert werden, insbesondere indem manuelle Arbeitsschritte vorteilhaft automatisiert werden können. Zudem kann durch die automatisierte Werkzeugspannvorrichtung vorteilhaft eine möglichst präzise und/oder über eine Mehrzahl verschiedener Werkzeugspannvorgänge konstante Einstellung einer Werkzeugspannkraft und/oder eines Werkzeugspanndrehmoments ermöglicht werden.

Unter einer "automatisierten Werkzeugspannvorrichtung" soll insbesondere eine Vorrichtung verstanden werden, welche dazu vorgesehen ist, zumindest ein zu einem Einspannen des Werkzeugs in das Werkzeugfutter und/oder zu einem Ausspannen des Werkzeugs aus dem Werkzeugfutter notwendiges Drehmoment automatisiert zu erzeugen und/oder automatisiert an das Werkzeugfutter zu übertragen. Unter der Wendung "automatisiert" soll in diesem Zusammenhang insbesondere maschinell und/oder unabhängig von einem Eingriff eines Bedieners, insbesondere unabhängig von einem Eingriff des Bedieners mit Ausnahme einer Aktivierung, bzw. Deaktivierung des Werkzeugspannvorgangs durch den Bediener und/oder einer Einstellung eines Maschinenparameters der automatisierten Werkzeugspannvorrichtung, wie beispielsweise ein Zieldrehmoment, durch den Bediener, verstanden werden. Unter einer "vollautomatisierten Werkzeugspannvorrichtung" soll insbesondere eine Vorrichtung verstanden werden, welche dazu vorgesehen ist, den Werkzeugein- und/oder Werkzeugausspannvorgang vollständig unabhängig von einem Eingriff des Bedieners vorzunehmen, insbesondere mit Ausnahme einer Aktivierung, bzw. Deaktivierung des vollautomatisierten Werkzeugspannvorgangs durch den Bediener und/oder einer Einstellung eines Maschinenparameters der vollautomatisierten Werkzeugspannvorrichtung. Insbesondere ist die vollautomatisierte Werkzeugspannvorrichtung dazu vorgesehen, alle Arbeitsschritte des Werkzeugein- und/oder Werkzeugausspannvorgangs von einem Einsetzen des Werkzeugfutters in die vollautomatisierte Werkzeugspannvorrichtung bis zu einer anschließenden Entnahme des Werkzeugfutters aus der vollautomatisierten Werkzeugspannvorrichtung automatisiert, insbesondere zumindest maschinell und/oder unabhängig von einem Eingriff eines Bedieners, vorzunehmen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Werkzeug" soll insbesondere ein Werkzeug mit einem zylindrischen Schaft verstanden werden. Insbesondere ist das Werkzeug als ein Zerspanungswerkzeug ausgebildet. Insbesondere ist das Werkzeug als ein Präzisionswerkzeug ausgebildet, wobei das Werkzeug insbesondere eine hohe Rundlaufpräzision aufweist. Insbesondere ist das Werkzeug als eine Reibahle, ein Wälzfräser, ein Meißel, ein Senker und/oder vorzugsweise als ein Bohrer und/oder ein Fräser ausgebildet. Unter einem "Werkzeugfutter" soll insbesondere ein Bauteil verstanden werden, welches zu einer Aufnahme eines Werkzeugs und einer Verbindung des Werkzeugs mit einer Maschine vorgesehen ist. Insbesondere ist das Werkzeugfutter als eine Schnittstelle zwischen Werkzeug und Maschine ausgebildet. Vorzugsweise ist das Werkzeugfutter als ein Spannzangenfutter ausgebildet. Insbesondere weist das Spannzangenfutter eine Spannzange auf. Insbesondere ist die Spannzange dazu vorgesehen, das Werkzeug kraftschlüssig einzuspannen. Insbesondere ist die Spannzange mittels eines Festschraubens einer Überwurfmutter spannbar. Unter einer "Überwurfmutter" soll insbesondere ein Bauteil verstanden werden, welches dazu vorgesehen ist, zumindest teilweise auf die Spannzange des Werkzeugfutters und/oder auf einen Grundkörper des Werkzeugfutters aufschraubbar zu sein. Insbesondere weist die Überwurfmutter ein Innengewinde auf. Insbesondere weist das Werkzeugfutter ein Außengewinde auf. Insbesondere wird zu einem Einspannen des Werkzeugs in das Werkzeugfutter die Überwurfmutter über das in das Werkzeugfutter eingeführte Werkzeug gestülpt und mit dem Werkzeugfutter verschraubt, bis ein festgelegtes Drehmoment erreicht wird. Insbesondere ist die Überwurfmutter zumindest im Wesentlichen zylindrisch oder prismenförmig ausgebildet. Insbesondere weist die Überwurfmutter eine glatte Zylinderoberfläche oder eine glatte Prismenoberfläche auf. Insbesondere weist die Überwurfmutter Werkzeugflächen, beispielsweise Schlüsselflächen, Kanten, Löcher, Schlitze oder dergleichen, welche dazu vorgesehen sind, eine Kraftübertragung eines Werkzeugs an die Überwurfmutter zu erleichtern, auf. Vorzugsweise ist die Überwurfmutter jedoch frei von Werkzeugflächen, beispielsweise Schlüsselflächen, Kanten, Löchern, Schlitzen oder dergleichen ausgebildet. Insbesondere weist die Überwurfmutter einen Außendurchmesser auf, welcher zumindest im Wesentlichen einem Außendurchmesser des Werkzeugfutters entspricht. Insbesondere ist die die Überwurfmutter und/oder das Werkzeugfutter zumindest im Wesentlichen achsensymmetrisch ausgebildet. Vorzugsweise ist die Überwurfmutter und/oder das Werkzeugfutter jedoch zumindest im Wesentlichen rotationssymmetrisch ausgebildet. Unter "im Wesentlichen rotationssymmetrisch" soll insbesondere im Rahmen üblicher Fehlertoleranzen rotationssymmetrisch verstanden werden. Insbesondere weist die Überwurfmutter und/oder das Werkzeugfutter eine hohe Rundlaufpräzision auf. Unter einer "hohen Rundlaufpräzision" soll insbesondere eine Rundlaufpräzision verstanden werden, die kleiner als 0,005 mm, vorzugsweise kleiner als 0,002 mm und bevorzugt kleiner als 0,001 mm ist.

Darunter, dass das Drehmomentaufnahmeelement ein "Drehmoment aufnimmt" soll insbesondere verstanden werden, dass das Drehmomentaufnahmeelement dazu vorgesehen ist, einem während dem Werkzeugspannvorgang erzeugten Drehmoment entgegenzuwirken und somit dazu vorgesehen ist, ein Verdrehen des Spannelements und/oder der Überwurfmutter relativ zu dem Drehmomentaufnahmeelement zu unterbinden. Das Drehmoment kann dabei insbesondere zumindest teilweise durch das Spannelement und/oder durch das Drehmomentaufnahmeelement erzeugt werden, vorzugsweise wird das Drehmoment jedoch von einer von dem Spannelement und/oder dem Drehmomentaufnahmeelement verschieden, bzw. separat ausgebildeten Einheit erzeugt.

Weiterhin wird vorgeschlagen, dass das Spannelement dazu vorgesehen ist, eine zumindest zu einem Großteil kraftschlüssige Verbindung mit der Überwurfmutter des Werkzeugfutters herzustellen. Dadurch kann durch die automatisierte Werkzeugspannvorrichtung vorteilhaft ein Werkzeugspannvorgang für ein Werkzeugfutter ermöglicht werden, welches mittels einer Überwurfmutter gespannt wird, die frei ist von Schlüsselflächen, Kerben, Löchern und/oder vergleichbaren Werkzeugangriffsflächen und/oder die eine glatte, rotationssymmetrische Oberflächenform an einer nach außen gewandten Oberfläche aufweist. Vorteilhaft kann ein automatisierter Werkzeugein- und/oder Werkzeugausspannvorgang für Werkzeugspannfutter des Herstellers Nikken, welche eine Zylinderform mit einer glatten Oberfläche aufweisen, ermöglicht werden. Unter einer "kraftschlüssigen Verbindung" soll insbesondere eine Verbindung unter Verwendung einer Kraft, beispielsweise einer Reibungskraft und/oder einer Druckkraft, verstanden werden. Insbesondere ist die kraftschlüssige Verbindung des Spannelements mit der Überwurfmutter des Werkzeugfutters zumindest im Wesentlichen frei von einer zusätzlichen formschlüssigen Verbindung. Unter "zu einem Großteil" soll insbesondere zumindest zu 60 %, vorzugsweise zumindest zu 75 %, vorteilhaft zumindest zu 85 %, bevorzugt zumindest zu 95 % und besonders bevorzugt zumindest zu 99 % verstanden werden.

Ferner wird vorgeschlagen, dass das Drehmomentaufnahmeelement einen Drehmomentsensor umfasst. Dadurch kann vorteilhaft ein durch das Drehmomentaufnahmeelement aufgenommenes Drehmoment sensiert werden, wodurch vorteilhaft eine präzise Steuerung, Überwachung und/oder Protokollierung des Drehmoments während des Werkzeugspannvorgangs ermöglicht werden kann. Zudem kann dadurch vorteilhaft eine werkzeugfutterspezifische Spannkraft in dem Werkzeugspannvorgang präzise eingestellt werden. Vorteilhaft kann eine hohe Genauigkeit des Werkzeugspannvorgangs erreicht werden. Der Drehmomentsensor ist insbesondere dazu vorgesehen, ein an dem Drehmomentaufnahmeelement angreifendes Drehmoment zu sensieren. Insbesondere ist der Drehmomentsensor als ein, insbesondere mechanischer und/oder elektronischer, vorzugsweise digitaler, Drehmomentaufnehmer ausgebildet. Der Drehmomentaufnehmer weist insbesondere einen Datenausgang auf. Der Datenausgang des Drehmomentaufnehmers ist insbesondere dazu vorgesehen, Drehmomentmessdaten auszugeben. Der Drehmomentsensor ist insbesondere dazu vorgesehen, Daten mit einer Steuer- und/oder Regeleinheit eines Werkzeugeinstell- und/oder Werkzeugmessgeräts auszutauschen.

Zudem wird vorgeschlagen, dass die Werkzeugspannvorrichtung zumindest eine Steuer- und/oder Regeleinheit aufweist, welche dazu vorgesehen ist, einen Verlauf eines Drehmoments, welches die Werkzeugspannvorrichtung bei dem Werkzeugspannvorgang auf die Überwurfmutter ausübt, zu steuern und/oder zu regeln. Dadurch kann vorteilhaft eine hohe Präzision des Werkzeugspannvorgangs erreicht werden. Zudem können vorteilhaft komplexe Spannzyklen, bei welchen ein Werkzeug beispielsweise mit unterschiedlichen Kräften vorgespannt und endgespannt wird und/oder bei welchem im Anschluss an ein Festziehen auf ein bestimmtes Drehmoment ein teilweises Zurückdrehen der Überwurfmutter erfolgt, gefahren werden. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuer- und/oder Regeleinheit ist insbesondere dazu vorgesehen, Daten des Drehmomentsensors auszulesen und in Steuer- und/oder Regelbefehle zu einer Steuerung und/oder Regelung eines drehmomenterzeugenden Bauteils umzuwandeln. Insbesondere ist die Steuer- und/oder Regeleinheit einstückig mit der Steuer- und/oder Regeleinheit des Werkzeugeinstell- und/oder Werkzeugmessgeräts und/oder einer Recheneinheit des Werkzeugeinstell- und/oder Werkzeugmessgeräts ausgebildet.

Außerdem wird vorgeschlagen, dass die Steuer- und/oder Regeleinheit dazu vorgesehen ist, zumindest ein maximales Drehmoment, welches die Werkzeugspannvorrichtung, insbesondere zumindest eine Drehmomenterzeugungseinheit der Werkzeugspannvorrichtung, bei dem ZO 11959 EP Werkzeugspannvorgang auf die Überwurfmutter ausübt, einzustellen. Dadurch kann vorteilhaft eine hohe Präzision des Werkzeugspannvorgangs erreicht werden. Zudem kann vorteilhaft eine hohe Betriebssicherheit erreicht werden und/oder eine Beschädigung von Werkzeugen und/oder Werkzeugfuttern durch ein zu starkes Anziehen der Überwurfmutter vermieden werden. Insbesondere weist die Steuer- und/oder Regeleinheit zumindest ein Eingabemodul auf, welches zumindest zu einer Eingabe eines werkzeugspezifischen maximalen Drehmoments vorgesehen ist, beispielsweise mittels einer Bedienereingabe und/oder mittels eines Auslesens von Werkzeuginformationen aus einer Datenbank und/oder aus einem Werkzeugdatenspeicher wie beispielsweise einem Speicherchip, einem Barcode und/oder einem Data-Matrix.Code.

Des Weiteren sind das Spannelement und das Drehmomentaufnahmeelement erfindungsgemäß getrennt voneinander ausgebildet. Dadurch kann vorteilhaft eine hohe Flexibilität und/oder Kompatibilität erreicht werden, insbesondere indem das Spannelement austauschbar ausgebildet ist. Dadurch können vorteilhaft für verschiedene Werkzeugfutter und/oder für verschiedene Überwurfmuttern, insbesondere Überwurfmuttern mit verschiedenen Außenformen und/oder Schlüsselflächen, verschiedene Spannelemente verwendet werden. Zudem kann dadurch insbesondere ein Austausch eines verschlissenen und/oder fehlerhaften Spannelements erleichtert werden, wodurch vorteilhaft eine einfache Wartung ermöglicht werden kann. Erfindungsgemäß ist das Spannelement lose auf das Werkzeugfutter aufsetzbar und/oder abnehmbar ausgebildet. Erfindungsgemäß ist das Spannelement entkoppelt von dem Drehmomentaufnahmeelement und/oder von weiteren Bauteilen der Werkzeugspannvorrichtung bewegbar und/oder auf das Werkzeugfutter aufsetzbar ausgebildet. Unter der Wendung "getrennt voneinander ausgebildet" soll insbesondere verstanden werden, dass zwei Objekte frei sind von gemeinsamen Bauteilen und/oder frei sind von die Objekte direkt und/oder indirekt verbindenden Bauteilen. Beispielsweise ist das Spannelement frei von Befestigungen, die das Spannelement unlösbar und/oder dauerhaft mit einem Bauteil verbinden mit welchem auch das Drehmomentaufnahmeelement unlösbar und/oder dauerhaft verbunden ist. Vorzugsweise umfasst die Werkzeugspannvorrichtung eine Mehrzahl an Spannelementen. Ein Teil der Mehrzahl an Spannelementen ist dabei insbesondere zumindest im Wesentlichen identisch zueinander ausgebildet. Ein weiterer Teil der Mehrzahl an Spannelementen ist dabei insbesondere zumindest im Wesentlichen verschieden voneinander ausgebildet, beispielsweise mit unterschiedlichen Verbindungsmechanismen, insbesondere unterschiedlichen Klemmmechanismen, und/oder unterschiedlich geformten und/oder unterschiedlich großen Aufnahmebereichen zur Kontaktierung und/oder zur Klemmung der Überwurfmuttern.

Weiterhin wird vorgeschlagen, dass das Drehmomentaufnahmeelement zumindest ein Drehmomentübertragungselement aufweist, welches dazu vorgesehen ist, das Drehmomentaufnahmeelement mit dem Spannelement rotationsfest zu koppeln, insbesondere um eine Drehung des Spannelements bei dem Werkzeugspannvorgang zumindest im Wesentlichen zu verhindern. Dadurch kann vorteilhaft eine effektive Drehmomentübertragung, insbesondere zwischen separat voneinander ausgebildeten Bauteilen der Werkzeugspannvorrichtung, ermöglicht werden. Zudem kann dadurch eine hohe Flexibilität erreicht werden, insbesondere indem das Drehmomentaufnahmeelement mit einer Vielzahl unterschiedlicher Spannelemente koppelbar ist. Das Drehmomentübertragungselement ist insbesondere als zumindest ein geometrisches Objekt, beispielsweise ein Vorsprung und/oder eine Ausnehmung an dem Drehmomentaufnahmeelement ausgebildet, welche vorzugsweise dazu vorgesehen ist, derart mit einem korrespondierenden Drehmomentübertragungselement des Spannelements zu wechselwirken, dass eine relative Rotation des Drehmomentaufnahmeelements und des Spannelements unterbunden wird. Das Drehmomentübertragungselement ist insbesondere dazu vorgesehen, eine temporäre rotationsfeste Kopplung zwischen dem Drehmomentaufnahmeelement und dem Spannelement zu erlauben. Insbesondere ist das Drehmomentübertragungselement als zumindest ein Bolzen, als zumindest ein Haken und/oder als zumindest eine Aufnahme für einen Bolzen und/oder einen Haken ausgebildet. Alternativ oder zusätzlich ist vorstellbar, dass das Drehmomentübertragungselement und/oder das korrespondierende Drehmomentübertragungselement des Spannelements als ein magnetisches Koppelelement, beispielsweise als ein Permanentmagnet und/oder als ein Elektromagnet ausgebildet ist.

Zusätzlich wird vorgeschlagen, dass das das Spannelement einen Verbindungsmechanismus, insbesondere einen Klemmmechanismus zu der Herstellung der, insbesondere kraftschlüssigen, Verbindung mit der Überwurfmutter aufweist, welcher knarrenartig bedienbar ausgebildet ist. Dadurch kann vorteilhaft die kraft- und/oder formschlüssige Verbindung zwischen dem Spannelement und der Überwurfmutter erzeugt werden. Zudem kann insbesondere durch die knarrenartige Bedienbarkeit vorteilhaft eine hohe Bedienflexibilität erreicht werden, insbesondere indem ein Festziehen der Überwurfmutter auch mit Rotationen erreicht werden kann, welche keine volle Umdrehung des Spannelements um 360° erfordert. Insbesondere weist das Spannelement einen Klemmbereich auf, welcher dazu vorgesehen ist, die Überwurfmutter zumindest teilweise in einer Umfangrichtung zu umschließen. Insbesondere weist das Spannelement eine Mehrzahl an Klemmelementen auf. Insbesondere sind die Klemmelemente in Umfangsrichtung des Klemmbereichs angeordnet. Insbesondere sind die Klemmelemente zu einer Herstellung der kraftschlüssigen Verbindung mit der Überwurfmutter vorgesehen. Insbesondere sind die Klemmelemente dazu vorgesehen die Überwurfmutter mittels einer Verkleinerung des Klemmbereichs, insbesondere des Umfangs des Klemmbereichs, in dem Klemmbereich festzuklemmen. Alternativ kann das Spannelement zumindest einen Überwurfmutterkontaktbereich aufweisen, welcher mit zumindest einer Werkzeugfläche einer Überwurfmutter korrespondierend ausgebildet ist und insbesondere dazu vorgesehen ist, zu einer Übertragung eines Drehmoments zwischen Überwurfmutter und Spannelement einen Eingriff mit den Werkzeugflächen der Überwurfmutter auszubilden. Unter der Wendung "knarrenartig bedienbar" soll insbesondere verstanden werden, dass der Verbindungsmechanismus, insbesondere der Klemmmechanismus, nach Art einer Knarre und/oder einer Ratsche bedienbar ist, wobei insbesondere die durch den Verbindungsmechanismus verbundene, insbesondere durch den Klemmmechanismus geklemmte, Überwurfmutter in eine Rotationsrichtung um eine Symmetrieachse der Überwurfmutter rotationsfest mit dem Spannelement verbunden ist und wobei die durch den Verbindungsmechanismus verbundene, insbesondere durch den Klemmmechanismus geklemmte, Überwurfmutter in eine der Rotationsrichtung entgegengesetzte Rotationsrichtung im Wesentlichen frei rotierbar ist. Insbesondere ist die in dem Spannelement mittels des Verbindungsmechanismus verbundene, insbesondere mittels dem Klemmmechanismus geklemmte, Überwurfmutter "knarrenartig rotierbar". Insbesondere ist die in dem Spannelement mittels dem knarrenartig bedienbaren Verbindungsmechanismus verbundene, insbesondere mittels dem knarrenartig bedienbaren Klemmmechanismus geklemmte, Überwurfmutter derart mit dem Spannelement verbunden, dass in eine Rotationsrichtung um die Symmetrieachse der Überwurfmutter eine Drehmomentübertragung zwischen dem Spannelement und der Überwurfmutter erfolgen kann, während das Spannelement in der entgegengesetzten Rotationsrichtung zumindest teilweise frei um die Überwurfmutter rotierbar bleibt.

Ferner wird vorgeschlagen, dass das Spannelement ein Umschaltelement aufweist, welches dazu vorgesehen ist, ein Umschalten zwischen zwei entgegengesetzten Spannrotationsrichtungen des knarrenartig bedienbaren Verbindungsmechanismus, insbesondere Klemmmechanismus, zu ermöglichen. Dadurch kann vorteilhaft eine hohe Flexibilität des Spannelements erreicht werden, insbesondere indem ein Einspannen und ein Ausspannen eines Werkzeugs aus einem Werkzeugfutter mit dem gleichen Spannelement erfolgen kann. Alternativ ist jedoch vorstellbar, dass unterschiedliche Spannelemente für einen Einspannvorgang und für einen Ausspannvorgang eines Werkzeugs vorgesehen sind. Zudem kann vorteilhaft eine Richtung des Drehmoments an eine Richtung eines Gewindes des Werkzeugfutters und/oder der Überwurfmutter angepasst werden. Vorteilhaft ist die Werkzeugspannvorrichtung für Werkzeugfutter mit unterschiedlichen Gewinderichtungen einsetzbar. Insbesondere ist das Umschaltelement als ein Umschalthebel, als ein Umschaltknopf, als ein Umschaltschieber oder dergleichen ausgebildet. Insbesondere ist das Umschaltelement dazu vorgesehen, die Spannrotationsrichtung festzulegen. Unter einer "Spannrotationsrichtung" soll insbesondere eine Rotationsrichtung verstanden werden, in welcher eine Drehmomentübertragung zwischen dem Spannelement und der Überwurfmutter durch einen Kraftschluss mittels des Klemmmechanismus und/oder einen Formschluss des Verbindungsmechanismus ermöglicht ist.

Des Weiteren wird vorgeschlagen, dass das Drehmomentaufnahmeelement ein Betätigungselement umfasst, welches dazu vorgesehen ist, zumindest das Umschaltelement, insbesondere automatisiert, zu betätigen. Dadurch kann vorteilhaft eine hohe Flexibilität des Drehmomentaufnahmeelements erreicht werden. Zudem kann vorteilhaft ein automatisiertes Umschalten des knarrenartig bedienbaren Verbindungsmechanismus, insbesondere Klemmmechanismus, ermöglicht werden. Insbesondere ist das Betätigungselement als ein mechanisch und/oder elektrisch schaltbarer und/oder bedienbarer Aktor ausgebildet.

Zudem wird vorgeschlagen, dass die Werkzeugspannvorrichtung zumindest eine Drehmomenterzeugungseinheit aufweist, welche getrennt von dem Spannelement und/oder von dem Drehmomentaufnahmeelement ausgebildet ist und welche dazu vorgesehen ist, ein für den Werkzeugspannvorgang erforderliches Drehmoment zu erzeugen. Dadurch kann vorteilhaft eine von dem Spannelement und/oder dem Drehmomentaufnahmeelement entkoppelte Erzeugung eines Drehmoments für den Werkzeugspannvorgang ermöglicht werden. Dadurch kann insbesondere eine Stärke und/oder eine Präzision des erzeugten Drehmoments erhöht werden. Die Drehmomenterzeugungseinheit ist insbesondere als ein elektromotorischer Rotationsantrieb oder dergleichen ausgebildet. Alternativ oder zusätzlich kann die Drehmomenterzeugungseinheit einen pneumatischen und/oder einen hydraulischen Rotationsantrieb umfassen. Insbesondere ist die Drehmomenterzeugungseinheit dazu vorgesehen, das Werkzeugfutter in einem zusammenhängenden Rotationsschritt um zumindest 360° rotieren zu können. Insbesondere ist die Drehmomenterzeugungseinheit zumindest teilweise einstückig mit einem Rotationsantrieb, insbesondere einer CNC gesteuerten C-Achse, eines Werkzeugeinstell- und/oder Werkzeugmessgeräts, welcher auch für einen Werkzeugeinstell- und/oder Werkzeugmessvorgang des Werkzeugeinstell- und/oder Werkzeugmessgeräts verwendbar ist, ausgebildet. Darunter, dass zwei Einheiten, insbesondere zwei Antriebe "teilweise einstückig" ausgebildet sind, soll insbesondere verstanden werden, dass die Einheiten, insbesondere die Antriebe, zumindest ein, insbesondere zumindest zwei, vorteilhaft zumindest drei gemeinsame Elemente aufweisen, die Bestandteil, insbesondere funktionell wichtiger Bestandteil, beider Einheiten sind.

Außerdem wird vorgeschlagen, dass die Werkzeugspannvorrichtung zumindest eine weitere Drehmomenterzeugungseinheit aufweist, welche getrennt von der Drehmomenterzeugungseinheit ausgebildet ist. Dadurch kann vorteilhaft eine hohe Präzision und/oder ein besonders großer Bereich von einstellbaren Drehmomenten erreicht werden, insbesondere indem die verschiedenen Drehmomenterzeugungseinheiten unterschiedliche Arbeitsbereiche und/oder Genauigkeiten aufweisen. Die weitere Drehmomenterzeugungseinheit umfasst insbesondere einen hydraulischen und/oder pneumatischen Antrieb. Alternativ oder zusätzlich kann die Drehmomenterzeugungseinheit einen elektromotorischen Rotationsantrieb umfassen. Insbesondere ist die weitere Drehmomenterzeugungseinheit dazu vorgesehen, bei einer Rotation des Werkzeugfutters um Rotationswinkel von mehr als 360°, das Werkzeugfutter in einer Mehrzahl unzusammenhängender Rotationsschritte zu rotieren, wobei die einzelnen Rotationsschritte Rotationswinkel kleiner als 360° umfassen. Insbesondere ist die weitere Drehmomenterzeugungseinheit getrennt von einem Rotationsantrieb, insbesondere einer C-Achse, eines Werkzeugeinstell- und/oder Werkzeugmessgeräts, welcher auch für einen Werkzeugeinstell- und/oder Werkzeugmessvorgang des Werkzeugeinstell- und/oder Werkzeugmessgeräts verwendbar ist, ausgebildet.

Zudem wird vorgeschlagen, dass die Drehmomenterzeugungseinheit zu einem Vorspannen der Überwurfmutter vorgesehen ist und dass die weitere Drehmomenterzeugungseinheit zu einem Hauptspannen der Überwurfmutter vorgesehen ist. Dadurch kann vorteilhaft der Werkzeugspannvorgang optimiert werden. Insbesondere kann eine hohe Präzision erreicht werden. Unter einem "Vorspannen der Überwurfmutter" soll insbesondere ein Spannen der Überwurfmutter verstanden werden, bei welchem eine Spannkraft und/oder ein Drehmoment einen Bruchteil einer maximalen Spannkraft und/oder eines maximalen Drehmoments ausmacht. Insbesondere entspricht die Spannkraft und/oder das Spanndrehmoment bei dem Vorspannen zumindest 5 %, vorzugsweise maximal 10%, vorteilhaft maximal 15 %, bevorzugt maximal 20 %, und besonders bevorzugt maximal 30 % der maximalen Spannkraft und/oder des maximalen Drehmoments. Unter einem "Hauptspannen" soll insbesondere ein Spannen verstanden werden, bei dem die Überwurfmutter mit einer vorgesehenen maximalen Spannkraft und/oder einem vorgesehenen maximalen Drehmoment festgezogen wird. Insbesondere ist die weitere Drehmomenterzeugungseinheit dazu vorgesehen, bei einem Ausspannvorgang die maximale Spannkraft zu lösen. Insbesondere ist die Drehmomenterzeugungseinheit dazu vorgesehen, bei dem Ausspannvorgang im Anschluss an die Lösung der maximalen Spannkraft eine komplette Ablösung der Überwurfmutter von dem Werkzeugfutter vorzunehmen.

Außerdem wird vorgeschlagen, dass die weitere Drehmomenterzeugungseinheit ein Hubelement, insbesondere ein pneumatisches Hubelement oder ein hydraulisches Hubelement, zu einer Erzeugung eines linearen Hubs umfasst. Dadurch kann vorteilhaft ein hohes Drehmoment erreicht werden. Insbesondere umfasst die weitere Drehmomenterzeugungseinheit ein Kurvengetriebe, welches dazu vorgesehen ist, eine lineare Bewegung, insbesondere den linearen Hub, des Hubelements, insbesondere des pneumatischen Hubelements oder des hydraulischen Hubelements, in eine Rotationsbewegung umzuwandeln.

Insbesondere ist die weitere Drehmomenterzeugungseinheit dazu vorgesehen, eine Rotationsbewegung eines Spannelements der Werkzeugspannvorrichtung zu erzeugen, welche zu dem Hauptspannen der Überwurfmutter vorgesehen ist.

Wenn die Werkzeugspannvorrichtung zumindest eine Verstelleinheit aufweist, welche dazu vorgesehen ist, die weitere Drehmomenterzeugungseinheit entlang zumindest einer Raumrichtung, insbesondere zumindest einer Horizontalrichtung, zu verfahren, kann vorteilhaft eine hohe Flexibilität erreicht werden. Insbesondere ist die weitere Drehmomenterzeugungseinheit dadurch rotatorisch mit dem Werkzeugfutter und/oder der Überwurfmutter koppelbar und/oder entkoppelbar. Alternativ oder zusätzlich ist vorstellbar, dass die weitere Drehmomenterzeugungseinheit schwenkbar und/oder in zumindest eine, vorzugsweise zwei weitere Raumrichtungen verfahrbar ist. Insbesondere weist die Verstelleinheit zumindest einen Linearmotor auf, welcher zumindest dazu vorgesehen ist, die weitere Drehmomenterzeugungseinheit zu verfahren.

Wenn zudem die Werkzeugspannvorrichtung zumindest eine vertikale Verstelleinheit aufweist, welche zumindest dazu vorgesehen ist, ein vertikales Verfahren des Drehmomentaufnahmeelements zu erlauben, kann vorteilhaft eine automatisierte Kopplung zwischen dem Spannelement und dem Drehmomentaufnahmeelement ermöglicht werden. Dadurch kann vorteilhaft eine Steuerung, insbesondere Aktivierung und/oder Deaktivierung einer Drehmomentübertragung auf die Überwurfmutter ermöglicht werden. Zudem kann vorteilhaft eine hohe Flexibilität erreicht werden, insbesondere indem eine Position des Drehmomentaufnahmeelements an eine Größe eines Werkzeugfutters anpassbar ist. Insbesondere umfasst die vertikale Verstelleinheit einen Linearmotor oder dergleichen, welcher zumindest dazu vorgesehen ist, eine stufenlose Translation des Drehmomentaufnahmeelements in Vertikalrichtung vorzunehmen.

Außerdem wird ein Werkzeugeinstell- und/oder Werkzeugmessgerät vorgeschlagen, welches zumindest zu einer Einstellung und/oder, vorzugsweise optischen, Vermessung eines in einem Werkzeugfutter eingespannten Werkzeugs vorgesehen ist, mit einer automatisierten, insbesondere vollautomatisierten, Werkzeugspannvorrichtung und mit einem Vorsatzhalter, welcher zumindest zu einer, insbesondere drehfesten, Aufnahme eines Werkzeugfutters vorgesehen ist. Dadurch kann vorteilhaft ein Einstell- und/oder Messvorgang eines Werkzeugs in dem entsprechenden Werkzeugfutter mit der Überwurfmutter direkt während des Werkzeugein- und/oder Werkzeugausspannvorgangs und/oder nach dem Werkzeugein- und/oder Werkzeugausspannvorgang vorgenommen werden, wodurch insbesondere eine hohe Effizienz und/oder eine hohe Präzision erreicht werden kann. Vorteilhaft können die Funktionen zweier separater Geräte, eines Werkzeugspanngeräts für entsprechend ausgebildete Werkzeugfutter und des Werkzeugeinstell- und/oder Werkzeugmessgeräts in einem einzigen Gerät zusammengefasst werden. Insbesondere ist der Vorsatzhalter als ein Adapter ausgebildet, welcher dazu vorgesehen ist, das Werkzeugfutter relativ zu dem Werkzeugeinstell- und/oder Werkzeugmessgerät, insbesondere relativ zu einer drehbaren Spindeleinheit des Werkzeugeinstell- und/oder Werkzeugmessgeräts, zu haltern und/oder zu positionieren. Insbesondere ist der Vorsatzhalter rotationsfest mit der Spindeleinheit verbunden. Insbesondere weist der Vorsatzhalter eine an zumindest eine Außenform eines Werkzeugfutters angepasste Aufnahme auf. Insbesondere ist der Vorsatzhalter einfach auswechselbar ausgebildet. Es ist denkbar, dass das Werkzeugeinstell- und/oder Werkzeugmessgerät eine Vielzahl an Vorsatzhaltern für unterschiedliche Außenformen von Werkzeugfuttern umfasst. Insbesondere ist das Werkzeugfutter relativ zu dem Vorsatzhalter rotationsfest in dem Vorsatzhalter gehaltert. Insbesondere ist der Vorsatzhalter dazu vorgesehen, ein mittels der Drehmomenterzeugungseinheit und/oder mittels der weiteren Drehmomenterzeugungseinheit erzeugtes Drehmoment zumindest auf das Werkzeugfutter zu übertragen.

Des Weiteren wird vorgeschlagen, dass der Vorsatzhalter zumindest eine Kopplungseinheit aufweist, welche zu einer drehfesten Kopplung des Vorsatzhalters mit zumindest einer der Drehmomenterzeugungseinheiten der Werkzeugspannvorrichtung, insbesondere der Drehmomenterzeugungseinheit und/oder der weiteren Drehmomenterzeugungseinheit der Werkzeugspannvorrichtung, vorgesehen ist. Dadurch kann eine vorteilhafte Übertragung eines Drehmoments auf das Werkzeugfutter und/oder die Überwurfmutter ermöglicht werden. Insbesondere weist der Vorsatzhalter zumindest eine weitere Kopplungseinheit auf, welche zu einer drehfesten Kopplung mit der weiteren Drehmomenterzeugungseinheit der Werkzeugspannvorrichtung vorgesehen ist. Insbesondere ist die Kopplungseinheit zu einer betriebsmäßig lösbaren Kopplung der weiteren Drehmomenterzeugungseinheit und des Vorsatzhalters vorgesehen. Unter "betriebsmäßig lösbar" soll insbesondere während eines automatisierten Betriebs automatisiert lösbar verstanden werden. Insbesondere weist die weitere Drehmomenterzeugungseinheit eine korrespondierende Kopplungseinheit auf. Vorzugsweise erfolgt eine Kopplung zwischen der weiteren Drehmomenterzeugungseinheit und dem Vorsatzhalter mittels einer Kopplung, bevorzugt eines Ineinandergreifens, der Kopplungseinheit und der korrespondierenden Kopplungseinheit. Insbesondere ist die korrespondierende Kopplungseinheit gabel- oder maulschlüsselförmig ausgebildet. Dadurch kann vorteilhaft eine Kopplung der weiteren Drehmomenterzeugungseinheit mit dem Vorsatzhalter bereits mittels eines einfachen linearen Verfahrens der weiteren Drehmomenterzeugungseinheit, welches zu einem zumindest teilweisen Umgreifen der Kopplungseinheit durch die korrespondierende Kopplungseinheit führt, erreicht werden. Insbesondere ist die Kopplungseinheit in Form eines Antriebsprofils einer Schraube ausgebildet, welches insbesondere zumindest zwei zueinander zumindest im Wesentlichen parallel auf einer Außenwand, insbesondere auf einer Mantelfläche, des Vorsatzhalters verlaufende Schlüsselflächen aufweist. Zwei zueinander "drehfest" ausgebildete Objekte sollen insbesondere als zwei Objekte verstanden werden, welche frei sind von zueinander relativen Rotationsmöglichkeiten. Insbesondere sind drehfeste Objekte derart miteinander verbunden, dass ausschließlich eine gemeinsame Rotation der Objekte möglich ist.

Zusätzlich wird vorgeschlagen, dass das Werkzeugeinstell- und/oder Werkzeugmessgerät eine Winkelsensoreinheit aufweist, welche zumindest dazu vorgesehen ist, einen Drehwinkel, eine Drehrichtung und/oder eine Drehzahl des Vorsatzhalters zu sensieren. Dadurch kann vorteilhaft eine präzise Steuerung und/oder Regelung eines Festziehens und/oder eines Lösens der Überwurfmutter ermöglicht werden. Die Winkelsensoreinheit ist insbesondere als eine optische Winkelmesseinheit, beispielsweise unter Verwendung eines Lasers und/oder einer Kamera, als eine mechanische Winkelmesseinheit, beispielsweise unter Verwendung eines Messrades, und/oder einer Messfeder, als eine elektrische Winkelmesseinheit, beispielsweise unter Verwendung eines elektrischen Kontaktstroms, und/oder als eine magnetische Winkelmesseinheit, beispielsweise unter Verwendung einer Induktionsspannung, ausgebildet.

Ferner wird vorgeschlagen, dass das Werkzeugeinstell- und/oder Werkzeugmessgerät einen Handhabungsroboter aufweist, welcher zumindest dazu vorgesehen ist, ein Spannelement der Werkzeugspannvorrichtung automatisiert auf ein Werkzeugfutter aufzusetzen und/oder von einem Werkzeugfutter abzunehmen. Dadurch kann vorteilhaft eine Vollautomatisierung des Werkzeugspannvorgangs vorangetrieben werden. Dadurch kann vorteilhaft eine Arbeitsbelastung für einen Bediener sowie ein Risiko für Fehlbedienungen gesenkt werden. Der Handhabungsroboter ist insbesondere als ein mehrachsiger Industrieroboter ausgebildet. Der Handhabungsroboter weist insbesondere zumindest eine Greifereinheit auf, welche zumindest dazu vorgesehen ist, zumindest ein Spannelement aufzunehmen und/oder zu haltern. Der Handhabungsroboter ist insbesondere dazu vorgesehen, ein zu einem in dem Vorsatzhalter eingespannten Werkzeugfutter passendes Spannelement zu identifizieren und zu lokalisieren. Die Greifereinheit ist insbesondere dazu vorgesehen, das Spannelement aufzunehmen und zu einem Werkzeugfutter zu transportieren. Die Greifereinheit ist insbesondere dazu vorgesehen, das Spannelement auf das Werkzeugfutter aufzusetzen. Die Greifereinheit ist insbesondere dazu vorgesehen, das Spannelement im Anschluss an den Werkzeugspannvorgang von dem Werkzeugfutter abzunehmen. Das Spannelement weist zumindest ein Halteelement auf, welches zumindest dazu vorgesehen ist, eine Angriffsfläche für die Greifereinheit des Handhabungsroboters auszubilden. Das Halteelement ist insbesondere als eine Greiferrille ausgebildet.

Zudem wird ein Verfahren mit einer automatisierten Werkzeugspannvorrichtung, insbesondere vollautomatisierten Werkzeugspannvorrichtung vorgeschlagen, wobei ein Werkzeug mittels eines Festziehens einer Überwurfmutter eines Werkzeugfutters in das Werkzeugfutter eingespannt und/oder mittels eines Lösens der Überwurfmutter aus dem Werkzeugfutter ausgespannt wird, wobei ein Spannelement der Werkzeugspannvorrichtung mittels einer, insbesondere zumindest zu einem Großteil, kraftschlüssigen Verbindung, insbesondere Klemmverbindung, und/oder einer formschlüssigen Verbindung mit der Überwurfmutter des Werkzeugfutters verbunden, insbesondere verklemmt, wird und wobei ein während eines Werkzeugspannvorgangs, insbesondere während eines Werkzeugein- und/oder Werkzeugausspannvorgangs, auftretendes Drehmoment zumindest zu einem Großteil von einem Drehmomentaufnahmeelement der Werkzeugspannvorrichtung aufgenommen wird. Dadurch können insbesondere vorteilhafte Eigenschaften hinsichtlich eines Ein- und/oder Ausspannprozesses eines Werkzeugs, insbesondere eines Werkzeugs, welches eine formschlüssige Verbindung mit der Überwurfmutter und/oder vorzugsweise eine zumindest zu einem Teil, insbesondere zumindest zu einem Großteil, kraftschlüssige Klemmung der Überwurfmutter zur Manipulation der Überwurfmutter bei einem Werkzeugein- und/oder Werkzeugausspannvorgang erfordert, in ein Werkzeugfutter und/oder aus einem Werkzeugfutter erreicht werden. Vorteilhaft kann ein hoher Grad an Automatisierung erreicht werden.

Des Weiteren wird ein Verfahren zu einem automatisierten, insbesondere vollautomatisierten, Einspannen eines Werkzeugs in ein, eine Überwurfmutter aufweisendes, Werkzeugfutter mittels der Werkzeugspannvorrichtung vorgeschlagen, wobei die Überwurfmutter des Werkzeugfutters in zumindest einem Einspannschritt auf ein erstes Grenzdrehmoment angezogen wird und wobei die Überwurfmutter des Werkzeugfutters in zumindest einem, insbesondere zeitlich dem Einspannschritt nachfolgenden, weiteren Einspannschritt auf ein zweites Grenzdrehmoment angezogen wird, wobei ein Drehmoment zu einem Anziehen der Überwurfmutter in den beiden Einspannschritten von voneinander getrennt ausgebildeten, automatisiert betriebenen Drehmomenterzeugungseinheiten erzeugt wird. Dadurch kann vorteilhaft eine hohe Präzision des Einspannvorgangs erreicht werden. Zudem kann dadurch vorteilhaft eine hohe Bandbreite an möglichen Drehmomenten erreicht werden. Außerdem kann dadurch vorteilhaft eine hohe Geschwindigkeit des Einspannvorgangs erreicht werden, insbesondere indem in dem Einspannschritt zuerst eine schnelle, grobe Befestigung des Werkzeugfutters mittels der Drehmomenterzeugungseinheit erfolgt und in dem weiteren Einspannschritt ein langsameres, präzises Festziehen bis zu dem zweiten Grenzdrehmoment erfolgt. Zudem können dadurch vorteilhaft hohe Anzugmomente von Überwurfmuttern erreicht werden. Insbesondere liegt das erste Grenzdrehmoment unterhalb von etwa 25 Nm, vorzugsweise unterhalb von etwa 17 Nm, vorteilhaft unterhalb von etwa 12 Nm, bevorzugt unterhalb von etwa 7 Nm und besonders bevorzugt oberhalb von etwa 3 Nm. Insbesondere beträgt das zweite Grenzdrehmoment zumindest 40 Nm, vorzugsweise zumindest 50 Nm, vorteilhaft zumindest 60 Nm, bevorzugt zumindest 70 Nm und besonders bevorzugt höchstens 80 Nm. Insbesondere wird zwischen dem Einspannschritt und dem weiteren Einspannschritt ein in das Werkzeugfutter eingestecktes Werkzeug durch das Werkzeugeinstell- und/oder Werkzeugmessgerät automatisiert, insbesondere vollautomatisiert, auf Länge eingestellt. Dadurch kann vorteilhaft ein durch das erste Grenzdrehmoment erzeugter leichter Halt dazu genutzt werden, das Werkzeug gegen ein Verrutschen zu sichern, während eine Längeneinstellbarkeit erhalten bleibt. Im Anschluss an die Einstellung der Länge des Werkzeugs wird dieses dann durch das Festziehen bis zu dem zweiten Grenzdrehmoment fest in dem Werkzeugfutter fixiert. Dadurch kann vorteilhaft ein optimiertes kombiniertes Werkzeugeinspannen, Werkzeugvermessen und Werkzeugspannen ermöglicht werden.

Außerdem wird vorgeschlagen, dass zumindest das erste Grenzdrehmoment und/oder zumindest das zweite Grenzdrehmoment von einer Steuer- und/oder Regeleinheit der Werkzeugspannvorrichtung vorgegeben und/oder überwacht wird. Dadurch kann vorteilhaft ein hoher Grad an Automatisierung und/oder eine hohe Betriebssicherheit erreicht werden.

Des Weiteren wird vorgeschlagen, dass das zweite Grenzdrehmoment um ein Vielfaches, insbesondere zumindest um ein Dreifaches, vorzugsweise um ein Fünffaches, vorteilhaft um ein Siebenfaches, bevorzugt um ein Zehnfaches und besonders bevorzugt um ein 20-faches, größer ist als das erste Grenzdrehmoment. Dadurch kann vorteilhaft ein besonders hohes Anzugmoment der Überwurfmutter erreicht werden, wodurch vorteilhaft eine große Bandbreite an Werkzeugfuttern gespannt werden können.

Zudem wird ein Verfahren zu einem automatisierten, insbesondere vollautomatisierten, Ausspannen eines Werkzeugs aus einem, eine Überwurfmutter aufweisenden, Werkzeugfutter mittels einer Werkzeugspannvorrichtung vorgeschlagen, wobei die Überwurfmutter des Werkzeugfutters in zumindest einem Ausspannschritt automatisiert von einer weiteren Drehmomenterzeugungseinheit der Werkzeugspannvorrichtung um eine erste Anzahl Umdrehungen aufgedreht wird, und wobei die Überwurfmutter des Werkzeugfutters in zumindest einem, insbesondere zeitlich dem Ausspannschritt nachfolgenden, weiteren Ausspannschritt automatisiert von einer Drehmomenterzeugungseinheit der Werkzeugspannvorrichtung, welche getrennt von der weiteren Drehmomenterzeugungseinheit ausgebildet ist, um eine zweite Anzahl Umdrehungen aufgedreht wird und wobei die Gesamtzahl der Umdrehungen von der Drehmomenterzeugungseinheit und/oder von einer Winkelsensoreinheit der Werkzeugspannvorrichtung sensiert wird. Dadurch kann vorteilhaft eine hohe Präzision erreicht werden. Vorteilhaft kann verhindert werden, dass die Überwurfmutter bei einem Ausspannvorgang überdreht wird, wodurch Beschädigungen eines Gewindes der Überwurfmutter oder eines Gewindes des Werkzeugfutters vorteilhaft vermieden werden können. Zudem kann, insbesondere durch eine Sensierung der Gesamtzahl der Umdrehungen, vorteilhaft eine Automatisierung des Werkzeugausspannvorgangs verbessert werden, insbesondere indem sichergestellt werden kann, dass bei einem Abnehmen des Spannelements von dem Werkzeugfutter, insbesondere durch den Handhabungsroboter, die nach einem Werkzeugausspannvorgang noch immer in dem Spannelement verklemmte Überwurfmutter nicht mehr mit dem Werkzeugfutter verbunden ist, wodurch vorteilhaft Beschädigungen der automatisierten Werkzeugspannvorrichtung vermieden werden können.

Außerdem wird vorgeschlagen, dass bei einem Unterschreiten eines Lösedrehmoments der Ausspannschritt, insbesondere eine Drehmomenterzeugung der weiteren Drehmomenterzeugungseinheit, beendet wird und der weitere Ausspannschritt, insbesondere eine Drehmomenterzeugung der Drehmomenterzeugungseinheit, gestartet wird. Dadurch kann vorteilhaft ein besonders effektiver Werkzeugausspannvorgang ermöglicht werden. Zudem kann vorteilhaft sichergestellt werden, dass die Drehmomenterzeugungseinheiten vorzugsweise in ihren jeweiligen optimalen Drehmomentbereichen eingesetzt werden. Dadurch kann vorteilhaft eine hohe Lebensdauer der Werkzeugspannvorrichtung erreicht werden.

Zudem wird vorgeschlagen, dass der weitere Ausspannschritt, insbesondere eine Drehmomenterzeugung der Drehmomenterzeugungseinheit, gestoppt wird sobald ein Grenzwert einer Gesamtzahl an Umdrehungen der Überwurfmutter überschritten wird, wobei insbesondere die Gesamtzahl an Umdrehungen durch eine Addition der sensierten ersten Anzahl Umdrehungen und der sensierten zweiten Anzahl Umdrehungen gebildet wird. Dadurch kann vorteilhaft eine hohe Präzision erreicht werden. Vorteilhaft kann verhindert werden, dass die Überwurfmutter bei einem Ausspannvorgang überdreht wird, wodurch Beschädigungen eines Gewindes der Überwurfmutter oder eines Gewindes des Werkzeugfutters vorteilhaft vermieden werden können. Zudem kann, insbesondere durch eine Sensierung der Gesamtzahl der Umdrehungen, vorteilhaft eine Automatisierung des Werkzeugausspannvorgangs verbessert werden. Insbesondere entspricht der Grenzwert der Gesamtzahl an Umdrehungen einer Umdrehungszahl, welche zumindest größer, vorzugsweise um zumindest die Zahl 1 größer und bevorzugt höchstens um die Zahl 5 größer ist als die Gesamtzahl an Windungen des Innengewindes der Überwurfmutter. Alternativ oder zusätzlich ist denkbar, dass eine Zahl an Umdrehungen bei einem Einspannvorgang eines Werkzeugs in ein Werkzeugfutter durch die Winkelsensoreinheit registriert wird, in einem Datenträger abgespeichert wird und bei einem Ausspannvorgang als Grenzwert der Gesamtzahl an Umdrehungen, insbesondere als die vorgenannte Umdrehungszahl, festgesetzt wird.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination.

Es zeigen:
- Fig. 1: eine schematische Darstellung eines Werkzeugeinstell- und/oder Werkzeugmessgeräts mit einer automatisierten Werkzeugspannvorrichtung und einem Werkzeugfutter,
- Fig. 2: eine perspektivische, schematische Darstellung des Werkzeugfutters,
- Fig. 3: eine perspektivische, schematische Darstellung eines Spannelements der automatisierten Werkzeugspannvorrichtung,
- Fig. 4: eine perspektivische, schematische Darstellung eines Drehmomentaufnahmeelements der automatisierten Werkzeugspannvorrichtung,
- Fig. 5: eine perspektivische, schematische Darstellung des in einen Vorsatzhalter des Werkzeugeinstell- und/oder Werkzeugmessgeräts eingespannten Werkzeugfutters,
- Fig. 6: eine schematische Darstellung einer weiteren Drehmomenterzeugungseinheit der automatisierten Werkzeugspannvorrichtung,
- Fig. 7: ein schematisches Ablaufdiagramm eines Verfahrens mit der automatisierten Werkzeugspannvorrichtung und
- Fig. 8: eine schematische, perspektivische Darstellung eines alternativen Spannelements der automatisierten Werkzeugspannvorrichtung.

### Beschreibung der Ausführungsbeispiele

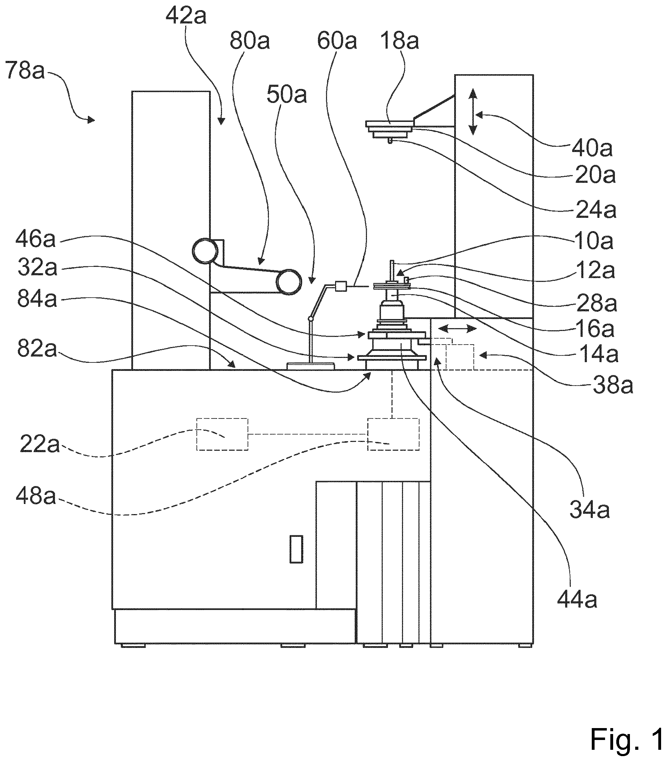

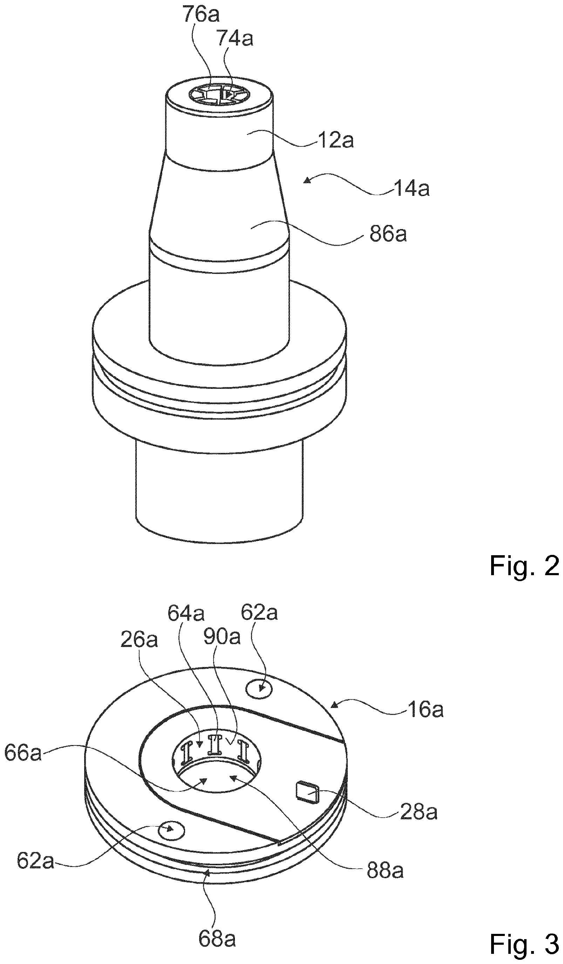

Fig. 1 zeigt ein Werkzeugeinstell- und/oder Werkzeugmessgerät 42a, welches zumindest zu einer Einstellung und/oder einer, vorzugsweise optischen, Vermessung eines in einem Werkzeugfutter 14a eingespannten Werkzeugs 10a vorgesehen ist. Das Werkzeugfutter 14a ist als ein Spannzangenfutter ausgebildet (vgl. auch Fig. 2). Das Werkzeugfutter 14a umfasst eine Überwurfmutter 12a. Das Werkzeugfutter 14a umfasst einen Grundkörper 86a. Die Überwurfmutter 12a ist auf den Grundkörper 86a aufschraubbar ausgebildet. Das Werkzeugfutter 14a weist eine Werkzeugaufnahme 74a auf. Die Werkzeugaufnahme 74a ist zu einem Einstecken und/oder einer Aufnahme eines Werkzeugschafts eines Werkzeugs 10a vorgesehen. Das Werkzeugfutter 14a weist eine Spannzange 76a auf. Die Spannzange 76a ist in der Werkzeugaufnahme 74a des Werkzeugfutters 14a angeordnet. Die Überwurfmutter 12a ist dazu vorgesehen, über ein in die Werkzeugaufnahme 74a eingestecktes Werkzeug 10a geführt und mit dem Grundkörper 86a des Werkzeugfutters 14a verschraubt zu werden. Die Spannzange 76a ist dazu vorgesehen mittels eines Aufschraubens der Überwurfmutter 12a gespannt zu werden. Die Spannzange 76a ist dazu vorgesehen, mittels eines Aufschraubens der Überwurfmutter 12a ein Werkzeug 10a in der Werkzeugaufnahme 74a zu fixieren.

Das Werkzeugeinstell- und/oder Werkzeugmessgerät 42a umfasst einen Messturm 78a. Der Messturm 78a weist eine optische Messeinrichtung 80a auf. Die optische Messeinrichtung 80a ist dazu vorgesehen, das in dem Werkzeugfutter 14a eingespannte Werkzeug 10a, insbesondere zumindest eine Schneide des in dem Werkzeugfutter 14a eingespannten Werkzeugs 10a, zu vermessen und/oder einzustellen. Die optische Messeinrichtung 80a ist als eine Durchlichtmesseinrichtung ausgebildet. Alternativ oder zusätzlich kann das Werkzeugeinstell- und/oder Werkzeugmessgerät 42a eine Auflichtmesseinrichtung umfassen. Die optische Messeinrichtung 80a ist vertikal entlang des Messturms 78a verfahrbar. Das Werkzeugeinstell- und/oder Werkzeugmessgerät 42a weist einen Messtisch 82a auf. Der Messturm 78a ist entlang des Messtisches 82a horizontal verfahrbar ausgebildet. Die optische Messeinrichtung 80a ist entlang des Messtisches 82a horizontal verfahrbar ausgebildet. Das Werkzeugeinstell- und/oder Werkzeugmessgerät 42a weist eine Steuer- und/oder Regeleinheit 22a auf. Die Steuer- und/oder Regeleinheit 22a ist zumindest dazu vorgesehen, die Bewegung und/oder die Funktion des Messturms 78a und/oder der optischen Messeinrichtung 80a zu steuern und/oder zu regeln. Die Steuer- und/oder Regeleinheit 22a umfasst zumindest eine Recheneinheit.

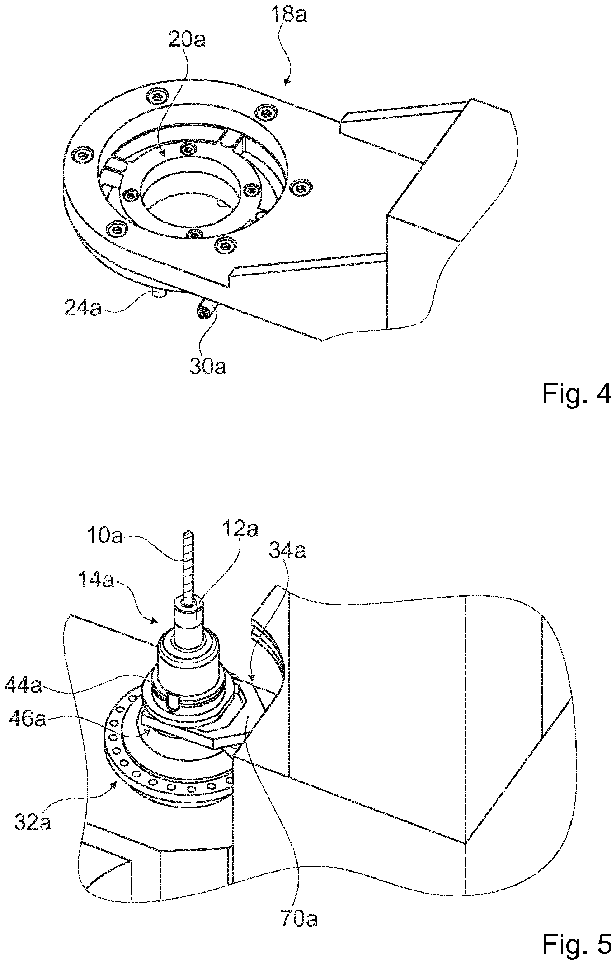

Das Werkzeugeinstell- und/oder Werkzeugmessgerät 42a weist einen Vorsatzhalter 44a auf. Der Vorsatzhalter 44a ist zu einer drehfesten Aufnahme eines Werkzeugfutters 14a vorgesehen. Der Vorsatzhalter 44a ist an eine Außenform des Werkzeugfutters 14a angepasst. Das Werkzeugeinstell- und/oder Werkzeugmessgerät 42a weist eine Mehrzahl verschieden geformter Vorsatzhalter 44a auf, welche an verschiedene Außenformen verschiedener Werkzeugfutter 14a angepasst sind. Der Vorsatzhalter 44a ist austauschbar ausgebildet. Das Werkzeugeinstell- und/oder Werkzeugmessgerät 42a weist eine Spindeleinheit 84a auf. Die Spindeleinheit 84a ist dazu vorgesehen mit einem Vorsatzhalter 44a drehfest zu koppeln. Die Spindeleinheit 84a ist fest mit dem Werkzeugeinstell- und/oder Werkzeugmessgerät 42a verbunden. Die Spindeleinheit 84a ist rotierbar ausgebildet. Der Vorsatzhalter 44a weist eine Kopplungseinheit 46a auf (vgl. auch Fig. 5). Die Kopplungseinheit 46a ist zu einer drehfesten Kopplung des Vorsatzhalters 44a mit einer Drehmomenterzeugungseinheit 34a einer automatisierten Werkzeugspannvorrichtung vorgesehen.

Das Werkzeugeinstell- und/oder Werkzeugmessgerät 42a weist eine Winkelsensoreinheit 48a auf. Die Winkelsensoreinheit 48a ist dazu vorgesehen, einen Drehwinkel, eine Drehrichtung und/oder eine Drehzahl des Vorsatzhalters 44 relativ zu dem Messtisch 82 des Werkzeugeinstell- und/oder Werkzeugmessgeräts 42a zu sensieren. Die Winkelsensoreinheit 48a ist teilweise einstückig mit der Steuer- und/oder Regeleinheit 22a ausgebildet. Alternativ oder zusätzlich ist die Winkelsensoreinheit 48a dazu vorgesehen, zumindest Winkelmessdaten und/oder Winkelgeschwindigkeitsmessdaten an die Steuer- und/oder Regeleinheit 22a zu übermitteln und/oder zumindest Steuer- und/oder Regelbefehle von der Steuer- und/oder Regeleinheit 22a zu empfangen und/oder zu verarbeiten.

Das Werkzeugeinstell- und/oder Werkzeugmessgerät 42a weist einen Handhabungsroboter 50a auf. Der Handhabungsroboter 50a ist dazu vorgesehen, ein Spannelement 16a der automatisierten Werkzeugspannvorrichtung automatisiert auf ein Werkzeugfutter 14a aufzusetzen und/oder von einem Werkzeugfutter 14a abzunehmen. Der Handhabungsroboter 50a ist als ein mehrachsiger Industrieroboter ausgebildet. Der Handhabungsroboter 50a weist eine Greifereinheit 60a auf. Die Greifereinheit 60a ist dazu vorgesehen, Spannelemente 16a zu greifen, aufzunehmen und/oder abzulegen.

Das Werkzeugeinstell- und/oder Werkzeugmessgerät 42a weist eine automatisierte Werkzeugspannvorrichtung auf. Die Werkzeugspannvorrichtung ist vollautomatisiert. Die Werkzeugspannvorrichtung ist dazu vorgesehen, zumindest ein Werkzeug 10a mittels eines Festziehens der Überwurfmutter 12a eines Werkzeugfutters 14a in das Werkzeugfutter 14a einzuspannen und/oder das Werkzeug 10a mittels eines Lösens der Überwurfmutter 12a aus dem Werkzeugfutter 14a auszuspannen. Die Werkzeugspannvorrichtung weist eine Steuer- und/oder Regeleinheit 22a auf. Die Steuer- und/oder Regeleinheit 22a der Werkzeugspannvorrichtung ist zumindest teilweise einstückig mit der Steuer- und/oder Regeleinheit 22a des Werkzeugeinstell- und/oder Werkzeugmessgeräts 42a ausgebildet.

Die Werkzeugspannvorrichtung weist ein Spannelement 16a auf (vgl. auch Fig. 3). Das Spannelement 16a ist lose auf das Werkzeugfutter 14a aufsetzbar ausgebildet. Das Spannelement 16a ist lose von dem Werkzeugfutter 14a abnehmbar ausgebildet. Das Spannelement 16a ist dazu vorgesehen, eine Verbindung mit der Überwurfmutter 12a des Werkzeugfutters 14a herzustellen. Das Spannelement 16a weist einen Verbindungsmechanismus 26a auf. Der Verbindungsmechanismus 26a ist zu einer Herstellung der Verbindung mit der Überwurfmutter 12a vorgesehen. Die Verbindung des Spannelements 16a mit der Überwurfmutter 12a ist als eine Klemmverbindung ausgebildet. Der Verbindungsmechanismus 26a des Spannelements 16a ist als ein Klemmmechanismus ausgebildet. Der in Fig. 3 gezeigte, als Klemmmechanismus ausgebildete, Verbindungsmechanismus 26a des Spannelements 16a ist dazu vorgesehen, eine zu einem Großteil kraftschlüssige Verbindung mit der Überwurfmutter 12a des Werkzeugfutters 14a herzustellen.

Das in Fig. 3 gezeigte Spannelement 16a weist einen Klemmbereich 66a auf. Der Klemmbereich 66a ist dazu vorgesehen, eine Überwurfmutter 12a aufzunehmen. Der Klemmbereich 66a ist dazu vorgesehen, eine Überwurfmutter 12a zu umschließen. Der Klemmbereich 66a bildet eine Ausnehmung 88a in dem Spannelement 16a aus. Die Ausnehmung 88a des Spannelements 16a weist eine zu einer Außenform der Überwurfmutter 12a korrespondierende Form auf. Das Spannelement 16a weist eine Mehrzahl an Klemmelementen 64a auf. Die Klemmelemente 64a sind verteilt entlang einer Wandung 90a der Ausnehmung 88a des Spannelements 16a angeordnet. Die Klemmelemente 64a sind dazu vorgesehen, eine Überwurfmutter 12a in dem Klemmbereich 66a festzuklemmen. Die Klemmelemente 64a sind dazu vorgesehen, eine zylinderförmige, frei von Werkzeugflächen ausgebildete Überwurfmutter 12a zu klemmen.

Der Verbindungsmechanismus 26a ist knarrenartig bedienbar ausgebildet. In einem Zustand, in dem das Spannelement 16a mit einem Werkzeug 10a verbunden ist, ist das Spannelement 16a mittels des knarrenartig bedienbaren Verbindungsmechanismus 26a um eine parallel zu einer Einsteckrichtung des Werkzeugs 10a in den Klemmbereich 66a verlaufende Rotationsachse in eine Rotationsrichtung teilweise um das Werkzeug 10a rotierbar, während es in einer der Rotationsrichtung entgegengesetzten Spannrotationsrichtung nur zusammen mit dem Werkzeug 10a rotierbar ist. Eine Rotation des Spannelements 16a in die Spannrotationsrichtung ist zu einem Festziehen und/oder einem Lösen einer Überwurfmutter 12a vorgesehen. Eine Rotation des Spannelements 16a in die der Spannrotationsrichtung entgegengesetzte Rotationsrichtung führt hingegen nicht zu einem Festziehen und/oder einem Lösen der Überwurfmutter 12a. Die Spannrotationsrichtung ist wählbar. Das Spannelement 16a weist ein Umschaltelement 28a auf, welches dazu vorgesehen ist, ein Umschalten zwischen zwei entgegengesetzten Spannrotationsrichtungen des knarrenartig bedienbaren Verbindungsmechanismus 26a zu ermöglichen.

Das Spannelement 16a weist ein Halteelement 68a auf. Das Halteelement 68a ist als eine Greiferrille ausgebildet. Das Halteelement 68a ist dazu vorgesehen, eine Angriffsfläche für die Greifereinheit 60a des Handhabungsroboters 50a auszubilden. Die Greifereinheit 60a des Handhabungsroboters 50a ist dazu vorgesehen, zu einem Aufnehmen des Spannelements 16a mittels gabelförmiger Greiferelemente der Greifereinheit 60a formschlüssig in das Halteelement 68a einzugreifen. Das Spannelement 16a weist korrespondierende Drehmomentübertragungselemente 62a auf. Die korrespondierenden Drehmomentübertragungselemente 62a sind zu einer Kopplung mit Drehmomentübertragungselementen 24a eines Drehmomentaufnahmeelements 18a vorgesehen.

Die Werkzeugspannvorrichtung weist das Drehmomentaufnahmeelement 18a auf (vgl. auch Fig. 4). Das Drehmomentaufnahmeelement 18a ist dazu vorgesehen, einen Großteil eines während eines Werkzeugspannvorgangs auftretenden Drehmoments aufzunehmen. Das Drehmomentaufnahmeelement 18a und das Spannelement 16a sind getrennt voneinander ausgebildet. Das Drehmomentaufnahmeelement 18a weist das Drehmomentübertragungselement 24a auf. Das Drehmomentübertragungselement 24a des Drehmomentaufnahmeelements 18a ist dazu vorgesehen, das Drehmomentaufnahmeelement 18a mit dem Spannelement 16a rotationsfest zu koppeln. Das Drehmomentübertragungselement 24a des Drehmomentaufnahmeelements 18a und das korrespondierende Drehmomentübertragungselement 62a des Spannelements 16a greifen zu einer Kopplung des Spannelements 16a mit dem Drehmomentaufnahmeelement 18a ineinander ein. Das Drehmomentübertragungselement 24a ist als ein Pin ausgebildet. Das korrespondierende Drehmomentübertragungselement 62a ist als eine Ausnehmung ausgebildet.

Die Werkzeugspannvorrichtung weist eine vertikale Verstelleinheit 40a auf. Die vertikale Verstelleinheit 40a ist dazu vorgesehen, ein vertikales Verfahren des Drehmomentaufnahmeelements 18a zu erlauben. Mittels des vertikalen Verfahrens des Drehmomentaufnahmeelements 18a ist eine Kopplung der Drehmomentübertragungselemente 24a, 62a herstellbar. Ein vertikales Absenken des Drehmomentaufnahmeelements 18a in Richtung eines auf ein Werkzeugfutter 14a aufgesetzten Spannelements 16a führt zu einem Eingreifen des Drehmomentübertragungselements 24a des Drehmomentaufnahmeelements 18a in das korrespondierende Drehmomentübertragungselement 62a des Spannelements 16a. Zumindest die Position und/oder zumindest die Verfahrgeschwindigkeit der vertikalen Verstelleinheit 40a ist mittels der Steuer- und/oder Regeleinheit 22a einstellbar. Beispielsweise ist denkbar, dass durch die optische Messeinrichtung 80a erfasste Positions- und/oder Dimensionsdaten durch die Steuer- und/oder Regeleinheit 22a verarbeitet und in Steuerbefehle für die vertikale Verstelleinheit 40a umgewandelt werden. Dadurch kann vorteilhaft eine präzise und/oder beschädigungsfreie Kopplung der Drehmomentübertragungselemente 24a, 62a ermöglicht werden. Insbesondere ist denkbar, dass die optische Messeinrichtung 80a dazu vorgesehen ist, fehlerhaft positionierte Spannelemente 16a, beispielsweise verdreht und/oder schräg auf dem Werkzeugfutter 14a aufliegende Spannelemente 16a zu erkennen und in der Konsequenz ein Absenken des Drehmomentaufnahmeelements 18a, bzw. eine Kopplung der Drehmomentübertragungselemente 24a, 62a miteinander, zu verhindern. Dadurch können Fehlfunktionen und/oder Beschädigungen der Werkzeugspannvorrichtung vorteilhaft vermieden werden.

Das Drehmomentaufnahmeelement 18a weist ein Betätigungselement 30a auf. Das Betätigungselement 30a ist dazu vorgesehen, das Umschaltelement 28a des Spannelements 16a zu betätigen. Das Betätigungselement 30a umfasst einen Pneumatikzylinder, welcher dazu vorgesehen ist, eine Bewegung zumindest eines Teils des Betätigungselements 30a zu erzeugen, welche dazu vorgesehen ist, das Umschaltelement 28a mechanisch zu betätigen.

Das Drehmomentaufnahmeelement 18a umfasst einen Drehmomentsensor 20a. Der Drehmomentsensor 20a ist dazu vorgesehen, ein an dem Drehmomentaufnahmeelement 18a anliegendes Drehmoment zu sensieren. Der Drehmomentsensor 20a ist als ein Drehmoment-Messflansch ausgebildet. Der Drehmomentsensor 20a umfasst einen Drehmomentaufnehmer. Der Drehmomentaufnehmer ist als ein Federkörper ausgebildet. Alternativ oder zusätzlich kann der Drehmomentaufnehmer nach einem piezoelektrischen, magnetoelastischen und/oder optischen Prinzip funktionieren. Die Steuer- und/oder Regeleinheit 22a ist dazu vorgesehen, Daten des Drehmomentsensors 20a auszulesen und/oder zu empfangen. Die Steuer- und/oder Regeleinheit 22a ist dazu vorgesehen, einen Verlauf eines Drehmoments, welches die Werkzeugspannvorrichtung bei dem Werkzeugspannvorgang auf die Überwurfmutter 12a ausübt, zu steuern und/oder zu regeln. Die Steuer- und/oder Regeleinheit 22a ist dazu vorgesehen, ein maximales Drehmoment, welches die Werkzeugspannvorrichtung bei dem Werkzeugspannvorgang auf die Überwurfmutter 12a ausübt, einzustellen.

Die Werkzeugspannvorrichtung weist eine Drehmomenterzeugungseinheit 32a auf (vgl. Fig. 1 oder Fig. 5). Die Drehmomenterzeugungseinheit 32a ist getrennt von dem Spannelement 16a und/oder getrennt von dem Drehmomentaufnahmeelement 18a ausgebildet. Die Drehmomenterzeugungseinheit 32a ist dazu vorgesehen, ein für den Werkzeugspannvorgang erforderliches Drehmoment zu erzeugen. Die Drehmomenterzeugungseinheit 32a ist zumindest teilweise einstückig mit der Spindeleinheit 84a des Werkzeugeinstell- und/oder Werkzeugmessgeräts 42a ausgebildet. Die Drehmomenterzeugungseinheit 32a ist zumindest teilweise einstückig mit einer Einheit des Werkzeugeinstell- und/oder Werkzeugmessgeräts 42a ausgebildet, welche zu einer Positionierung des Werkzeugs 10a während eines Mess- und/oder Einstellvorgangs des Werkzeugeinstell- und/oder Werkzeugmessgeräts 42a, beispielsweise mittels der optischen Messeinrichtung 80a, vorgesehen ist. Die Drehmomenterzeugungseinheit 32a ist zu einem Vorspannen der Überwurfmutter 12a während einem Werkzeugeinspannvorgang vorgesehen. Die Drehmomenterzeugungseinheit 32a, insbesondere das durch die Drehmomenterzeugungseinheit 32a erzeugte Drehmoment und/oder die durch die Drehmomenterzeugungseinheit 32a erzeugte Rotation, ist mittels der Steuer- und/oder Regeleinheit 22a steuerbar. Eine Steuerung und/oder Regelung des Drehmoments und/oder der Rotation der Drehmomenterzeugungseinheit 32a erfolgt auf Basis von Messdaten des Drehmomentsensors 20a.

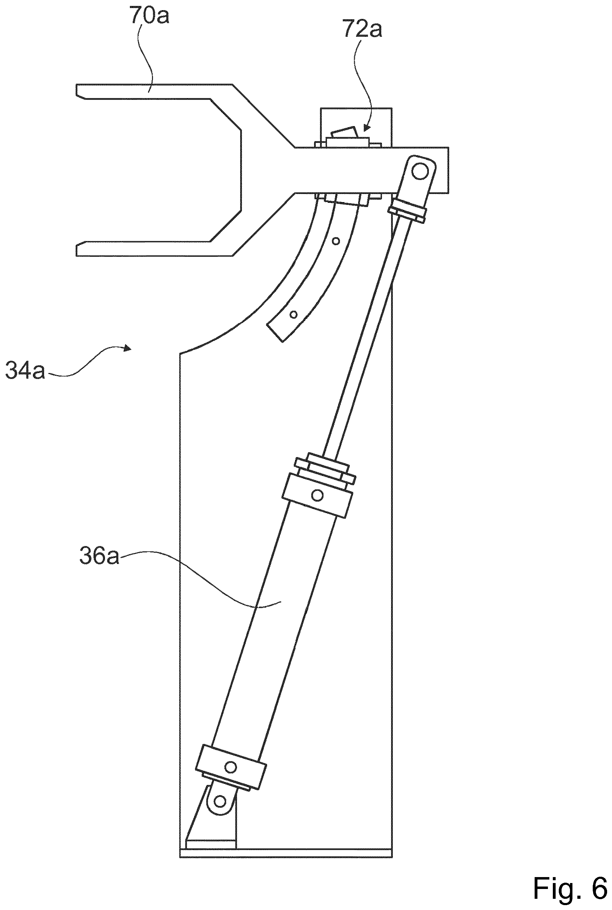

Die Werkzeugspannvorrichtung weist eine weitere Drehmomenterzeugungseinheit 34a auf (vgl. Fig. 1, Fig. 5 oder Fig. 6). Die weitere Drehmomenterzeugungseinheit 34a ist getrennt von der Drehmomenterzeugungseinheit 32a ausgebildet. Die weitere Drehmomenterzeugungseinheit 34a ist zu einem Hauptspannen der Überwurfmutter 12a vorgesehen. Die weitere Drehmomenterzeugungseinheit 34a ist dazu vorgesehen, ein größeres Drehmoment zu erzeugen als die Drehmomenterzeugungseinheit 32a. Die weitere Drehmomenterzeugungseinheit 34a umfasst eine korrespondierendes Kopplungseinheit 70a. Die korrespondierende Kopplungseinheit 70a ist dazu vorgesehen, mit der Kopplungseinheit 46a des Vorsatzhalters 44a zu koppeln. Die korrespondierende Kopplungseinheit 70a ist maulschlüsselförmig ausgebildet. Die maulschlüsselförmig geformte korrespondierende Kopplungseinheit 70a ist dazu vorgesehen, den Vorsatzhalter 44a zumindest teilweise zu umgreifen. Die weitere Drehmomenterzeugungseinheit 34a umfasst ein Kurvengetriebe 72a. Das Kurvengetriebe 72a ist dazu vorgesehen, eine Drehbewegung der korrespondierenden Kopplungseinheit 70a zu erzeugen. Die weitere Drehmomenterzeugungseinheit 34a umfasst ein Hubelement 36a. Das Hubelement 36a ist als ein pneumatisches Hubelement 36a, insbesondere als ein Pneumatikzylinder, ausgebildet. Alternativ kann das Hubelement 36a auch als ein hydraulisches Hubelement oder als ein Element mit einem motorischen Linearantrieb ausgebildet sein. Das Hubelement 36a ist dazu vorgesehen, einen im Wesentlichen linearen Hub zu erzeugen. Das Hubelement 36a ist dazu vorgesehen, die Bewegung der korrespondierenden Kopplungseinheit 70a entlang des durch das Kurvengetriebe 72a vorgegebenen Pfads zu erzeugen. Das Hubelement 36a ist im Zusammenspiel mit dem Kurvengetriebe 72a dazu vorgesehen, ein steuer- und/oder regelbares Drehmoment zu erzeugen, welches mittels der korrespondierenden Kopplungseinheit 70a auf den Vorsatzhalter 44a und damit auf die Überwurfmutter 12a des in dem Vorsatzhalter 44a eingesetzten Werkzeugfutters 14a übertragbar ist.

Die Werkzeugspannvorrichtung weist eine Verstelleinheit 38a auf. Die Verstelleinheit 38a ist dazu vorgesehen, die weitere Drehmomenterzeugungseinheit 34a entlang einer Horizontalrichtung zu verfahren. Die Verstelleinheit 38a ist dazu vorgesehen, die Kopplung zwischen der Kopplungseinheit 46a und der korrespondierenden Kopplungseinheit 70a mittels dem horizontalen Verfahren der weiteren Drehmomenterzeugungseinheit 34a herzustellen und/oder zu lösen.

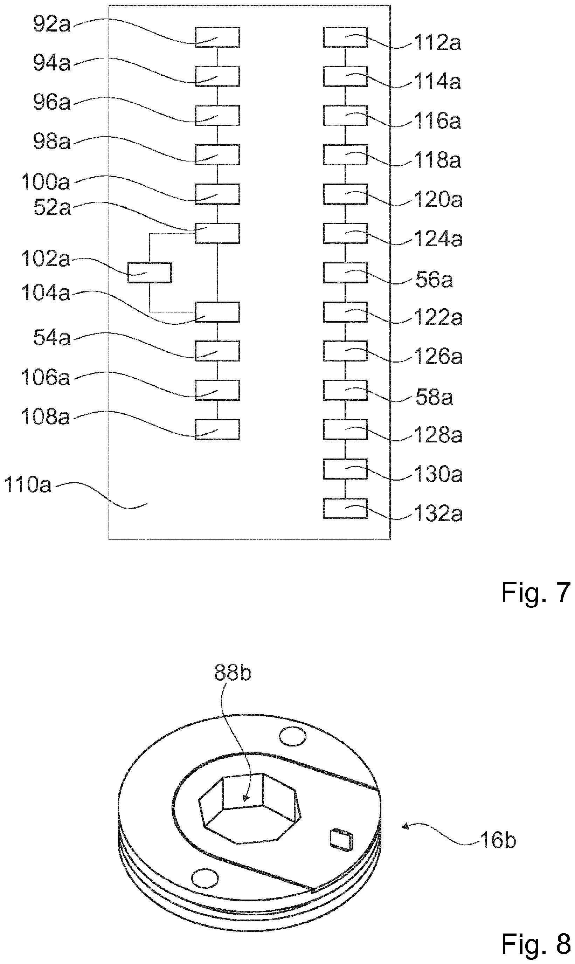

In der Fig. 7 ist ein schematisches Ablaufdiagramm eines Verfahrens 110a mit der automatisierten Werkzeugspannvorrichtung gezeigt, wobei das Werkzeug 10a mittels eines Festziehens der Überwurfmutter 12a des Werkzeugfutters 14a in das Werkzeugfutter 14a eingespannt und/oder mittels eines Lösens der Überwurfmutter 12a aus dem Werkzeugfutter 14a ausgespannt wird, wobei das Spannelement 16a der Werkzeugspannvorrichtung mittels der zu einem Großteil, kraftschlüssigen Verbindung und/oder der formschlüssigen Verbindung mit der Überwurfmutter 12a des Werkzeugfutters 14a verbunden wird und wobei das während des Werkzeugspannvorgangs auftretende Drehmoment zumindest zu einem Großteil von dem Drehmomentaufnahmeelement 18a der Werkzeugspannvorrichtung aufgenommen wird.

Bei einem Verfahren zu einem automatisierten Einspannen des Werkzeugs 10a in das Werkzeugfutter 14a wird in zumindest einem Verfahrensschritt 92a das Spannelement 16a von dem Handhabungsroboter 50a aufgenommen und auf das Werkzeugfutter 14a in das ein Werkzeug 10a eingesteckt ist, aufgesetzt. In zumindest einem weiteren Verfahrensschritt 94a wird das Spannelement 16a mit der Überwurfmutter 12a des Werkzeugfutters 14a verklemmt. In zumindest einem weiteren Verfahrensschritt 96a wird das Drehmomentaufnahmeelement 18a durch die vertikale Verstelleinheit 40a verfahren, insbesondere abgesenkt. In zumindest einem weiteren Verfahrensschritt 98a wird das Drehmomentaufnahmeelement 18a so weit durch die vertikale Verstelleinheit 40a abgesenkt, dass das Drehmomentübertragungselement 24a des Drehmomentaufnahmeelements 18a mit dem Drehmomentübertragungselement 62a des Spannelements 16a drehfest gekoppelt wird. In zumindest einem weiteren Verfahrensschritt 100a wird das Umschaltelement 28a des Spannelements 16a mittels des Betätigungselements 30a des Drehmomentaufnahmeelements 18a derart geschaltet, dass die Überwurfmutter 12a und das Spannelement 16a in einer Rotationsrichtung, welche dazu vorgesehen ist die Überwurfmutter 12a festzuziehen, rotationsfest miteinander gekoppelt sind.

In zumindest einem Einspannschritt 52a wird die Überwurfmutter 12a des Werkzeugfutters 14a von der Drehmomenterzeugungseinheit 32a auf ein erstes Grenzdrehmoment angezogen. Bei dem Anziehen der Überwurfmutter 12a auf das erste Grenzdrehmoment wird das momentane Drehmoment von der Steuer- und/oder Regeleinheit 22a der Werkzeugspannvorrichtung überwacht. Das erste Grenzdrehmoment wird von der Steuer- und/oder Regeleinheit 22a vorgegeben. Dabei ist denkbar, dass das erste Grenzdrehmoment im Vorfeld durch einen Bediener in die Steuer- und/oder Regeleinheit 22a händisch oder zumindest teilautomatisiert eingegeben wird. In zumindest einem weiteren Verfahrensschritt 102a wird das mit dem ersten Grenzdrehmoment voreingespannte Werkzeug 10a mittels des Werkzeugeinstell- und/oder Werkzeugmessgeräts 42a vermessen und/oder eingestellt, insbesondere auf Länge vermessen und eingestellt. In zumindest einem weiteren Verfahrensschritt 104a wird die korrespondierende Kopplungseinheit 70a der weiteren Drehmomenterzeugungseinheit 34a in Horizontalrichtung auf den Vorsatzhalter 44a zugefahren, wobei eine Kopplung zwischen der weiteren Drehmomenterzeugungseinheit 34a und dem Vorsatzhalter 44a erzeugt wird.

In zumindest einem, insbesondere zeitlich dem Einspannschritt 52a nachfolgenden, weiteren Einspannschritt 54a wird die Überwurfmutter 12a des Werkzeugfutters 14a von der weiteren Drehmomenterzeugungseinheit 34a auf ein zweites Grenzdrehmoment angezogen. Das zweite Grenzdrehmoment ist hierbei um ein Vielfaches größer ist als das erste Grenzdrehmoment. Bei dem Anziehen der Überwurfmutter 12a auf das zweite Grenzdrehmoment wird das momentane Drehmoment von der Steuer- und/oder Regeleinheit 22a der Werkzeugspannvorrichtung überwacht. Das zweite Grenzdrehmoment wird von der Steuer- und/oder Regeleinheit 22a vorgegeben. Dabei ist denkbar, dass das zweite Grenzdrehmoment im Vorfeld durch einen Bediener in die Steuer- und/oder Regeleinheit 22a händisch oder zumindest teilautomatisiert eingegeben wird. Alternativ oder zusätzlich ist denkbar, dass mittels der optischen Messeinrichtung 80a eine Bewegung einer Markierung auf der Überwurfmutter 12a und/oder auf dem Grundkörper 86a des Werkzeugfutters 14a zur Einstellung des zweiten Grenzdrehmoments überwacht wird. Dazu kann beispielsweise eine Deckungsgleichheit zweier Markierungen auf gegeneinander rotierten Teilen des Werkzeugfutters 14a überwacht werden. In zumindest einem weiteren Verfahrensschritt 106a wird die Kopplungseinheit 46a des Vorsatzhalters 44a und die korrespondierende Kopplungseinheit 70a der weiteren Drehmomenterzeugungseinheit 34a entkoppelt, wobei die weitere Drehmomenterzeugungseinheit 34a mittels der Verstelleinheit 38a horizontal von dem Vorsatzhalter 44a weggefahren wird. In zumindest einem weiteren Verfahrensschritt 108a wird die Klemmung des Spannelements 16a mit der Überwurfmutter 12a gelöst und das Spannelement 16a wird von dem Werkzeugfutter 14a durch den Handhabungsroboter 50a abgenommen.

Bei einem Verfahren zu einem automatisierten Ausspannen des Werkzeugs 10a in das Werkzeugfutter 14a wird in zumindest einem Verfahrensschritt 112a das Spannelement 16a von dem Handhabungsroboter 50a aufgenommen und auf das Werkzeugfutter 14a in das ein Werkzeug 10a eingespannt ist, aufgesetzt. In zumindest einem weiteren Verfahrensschritt 114a wird das Spannelement 16a mit der Überwurfmutter 12a des Werkzeugfutters 14a verklemmt. In zumindest einem weiteren Verfahrensschritt 116a wird das Drehmomentaufnahmeelement 18a durch die vertikale Verstelleinheit 40a verfahren, insbesondere abgesenkt. In zumindest einem weiteren Verfahrensschritt 118a wird das Drehmomentaufnahmeelement 18a soweit durch die vertikale Verstelleinheit 40a abgesenkt, dass das Drehmomentübertragungselement 24a des Drehmomentaufnahmeelements 18a mit dem Drehmomentübertragungselement 62a des Spannelements 16a drehfest gekoppelt wird. In zumindest einem weiteren Verfahrensschritt 120a wird das Umschaltelement 28a des Spannelements 16a mittels des Betätigungselements 30a des Drehmomentaufnahmeelements 18a derart geschaltet, dass die Überwurfmutter 12a und das Spannelement 16a in einer Rotationsrichtung, welche dazu vorgesehen ist, die Überwurfmutter 12a zu lösen, rotationsfest miteinander gekoppelt sind. In zumindest einem weiteren Verfahrensschritt 124a wird die korrespondierende Kopplungseinheit 70a der weiteren Drehmomenterzeugungseinheit 34a in Horizontalrichtung auf den Vorsatzhalter 44a zugefahren, wobei eine Kopplung zwischen der weiteren Drehmomenterzeugungseinheit 34a und dem Vorsatzhalter 44a erzeugt wird.

In zumindest einem Ausspannschritt 56a wird die Überwurfmutter 12a automatisiert von der weiteren Drehmomenterzeugungseinheit 34a um eine erste Anzahl Umdrehungen aufgedreht. Hierbei wird die erste Anzahl Umdrehungen von der Winkelsensoreinheit 48a und/oder der Drehmomenterzeugungseinheit 32a sensiert. In zumindest einem weiteren Verfahrensschritt 122a wird bei einem Unterschreiten eines Lösedrehmoments der Ausspannschritt 56a, insbesondere die Drehmomenterzeugung der weiteren Drehmomenterzeugungseinheit 34a, beendet. In zumindest einem weiteren Verfahrensschritt 126a wird die Kopplungseinheit 46a des Vorsatzhalters 44a und die korrespondierende Kopplungseinheit 70a der weiteren Drehmomenterzeugungseinheit 34a entkoppelt, wobei die weitere Drehmomenterzeugungseinheit 34a mittels der Verstelleinheit 38a horizontal von dem Vorsatzhalter 44a weggefahren wird.

In zumindest einem, insbesondere zeitlich dem Ausspannschritt 56a nachfolgenden, weiteren Ausspannschritt 58a wird die Überwurfmutter 12a automatisiert von der Drehmomenterzeugungseinheit 32a, welche getrennt von der weiteren Drehmomenterzeugungseinheit 34a ausgebildet ist, um eine zweite Anzahl Umdrehungen aufgedreht. Hierbei wird die zweite Anzahl Umdrehungen von der Winkelsensoreinheit 48a und/oder der Drehmomenterzeugungseinheit 32a sensiert. Zudem wird in dem weiteren Ausspannschritt 58a von der Steuer- und/oder Regeleinheit 22a die Gesamtzahl der Umdrehungen ermittelt. In zumindest einem weiteren Verfahrensschritt 128a wird der weitere Ausspannschritt 58, insbesondere eine Drehmomenterzeugung der Drehmomenterzeugungseinheit 32a, gestoppt, sobald ein Grenzwert der Gesamtzahl an Umdrehungen der Überwurfmutter 12a überschritten wird. In zumindest einem weiteren Verfahrensschritt 130a wird von dem Handhabungsroboter 50a das Spannelement 16a von dem Werkzeugfutter 14a abgenommen. In zumindest einem weiteren Verfahrensschritt 132a wird das Werkzeug 10a aus dem Werkzeugfutter 14a entnommen.

In der Figur 8 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In dem Ausführungsbeispiel der Figur 8 ist der Buchstabe a durch den Buchstaben b ersetzt.

Figur 8 zeigt ein alternatives Spannelement 16b einer automatisierten Werkzeugvorrichtung. Das Spannelement 16b weist eine Ausnehmung 88b auf. Die Ausnehmung 88b weist eine oktogonale Prismenform auf. Die oktogonale Prismenform der Ausnehmung 88b ist an eine Außenform einer alternativen Überwurfmutter 12b eines alternativen Werkzeugfutters 14b, insbesondere an eine Werkzeugfläche der alternativen Überwurfmutter 12b des alternativen Werkzeugfutters 14b, angepasst. Alternativ kann die Ausnehmung 88b eine weitere von einer oktogonalen Prismenform abweichende, mit einer Überwurfmutter 12b korrespondierende Außenform aufweisen.

### Bezugszeichen

- 10: Werkzeug
- 12: Überwurfmutter
- 14: Werkzeugfutter
- 16: Spannelement
- 18: Drehmomentaufnahmeelement
- 20: Drehmomentsensor
- 22: Steuer- und/oder Regeleinheit
- 24: Drehmomentübertragungselement
- 26: Verbindungsmechanismus
- 28: Umschaltelement
- 30: Betätigungselement
- 32: Drehmomenterzeugungseinheit
- 34: Weitere Drehmomenterzeugungseinheit
- 36: Hubelement
- 38: Verstelleinheit
- 40: Vertikale Verstelleinheit
- 42: Werkzeugeinstell- und/oder Werkzeugmessgerät
- 44: Vorsatzhalter
- 46: Kopplungseinheit
- 48: Winkelsensoreinheit
- 50: Handhabungsroboter
- 52: Einspannschritt
- 54: Weiterer Einspannschritt
- 56: Ausspannschritt
- 58: Weiterer Ausspannschritt
- 60: Greifereinheit
- 62: Korrespondierendes Drehmomentübertragungselement
- 64: Klemmelement
- 66: Klemmbereich
- 68: Halteelement
- 70: Korrespondierende Kopplungseinheit
- 72: Kurvengetriebe
- 74: Werkzeugaufnahme
- 76: Spannzange
- 78: Messturm
- 80: Optische Messeinrichtung
- 82: Messtisch
- 84: Spindeleinheit
- 86: Grundkörper
- 88: Ausnehmung
- 90: Wandung
- 92: Verfahrensschritt
- 94: Verfahrensschritt
- 96: Verfahrensschritt
- 98: Verfahrensschritt
- 100: Verfahrensschritt
- 102: Verfahrensschritt
- 104: Verfahrensschritt
- 106: Verfahrensschritt
- 108: Verfahrensschritt
- 110: Verfahren
- 112: Verfahrensschritt
- 114: Verfahrensschritt
- 116: Verfahrensschritt
- 118: Verfahrensschritt
- 120: Verfahrensschritt
- 122: Verfahrensschritt
- 124: Verfahrensschritt
- 126: Verfahrensschritt
- 128: Verfahrensschritt
- 130: Verfahrensschritt
- 132: Verfahrensschritt

## Patentansprüche

1. Automatisierte Werkzeugspannvorrichtung, welche dazu vorgesehen ist, zumindest ein Werkzeug (10a-b) mittels eines Festziehens einer Überwurfmutter (12a-b) eines Werkzeugfutters (14a-b) in das Werkzeugfutter (14a-b) einzuspannen oder das Werkzeug (10a-b) mittels eines Lösens der Überwurfmutter (12a-b) aus dem Werkzeugfutter (14a-b) auszuspannen, mit einem Spannelement (16a-b), welches zumindest dazu vorgesehen ist, eine Verbindung mit der Überwurfmutter (12a-b) des Werkzeugfutters (14a-b) herzustellen und mit einem Drehmomentaufnahmeelement (18a-b), welches zumindest dazu vorgesehen ist, zumindest einen Großteil eines während eines Werkzeugspannvorgangs auftretenden Drehmoments aufzunehmen,
**dadurch gekennzeichnet, dass** das Spannelement (16a-b) und das Drehmomentaufnahmeelement (18a-b) derart getrennt voneinander ausgebildet sind, dass das Spannelement (16a-b) lose auf das Werkzeugfutter (14a-b) aufsetzbar und/oder abnehmbar ausgebildet ist, und dass das Spannelement (16a-b) zumindest von dem Drehmomentaufnahmeelement (18a-b) entkoppelt bewegbar ist.

2. Werkzeugspannvorrichtung nach Anspruch 1, **dadurch gekennzeichnet, dass** das Spannelement (16a) dazu vorgesehen ist, eine zumindest zu einem Großteil kraftschlüssige Verbindung mit der Überwurfmutter (12a) des Werkzeugfutters (14a) herzustellen.

3. Werkzeugspannvorrichtung nach Anspruch 1 oder 2, **dadurch gekennzeichnet, dass** das Drehmomentaufnahmeelement (18a-b) einen Drehmomentsensor (20a-b) umfasst.

4. Werkzeugspannvorrichtung nach einem der vorhergehenden Ansprüche, **gekennzeichnet durch** zumindest eine Steuer- und/oder Regeleinheit (22a-b), welche dazu vorgesehen ist, einen Verlauf eines Drehmoments, welches die Werkzeugspannvorrichtung bei dem Werkzeugspannvorgang auf die Überwurfmutter (12a-b) ausübt, zu steuern und/oder zu regeln und/oder zumindest ein maximales Drehmoment, welches die Werkzeugspannvorrichtung bei dem Werkzeugspannvorgang auf die Überwurfmutter (12a-b) ausübt, einzustellen.

5. Werkzeugspannvorrichtung nach einem der vorhergehenden Ansprüche, **dadurch gekennzeichnet, dass** das Drehmomentaufnahmeelement (18a-b) zumindest ein Drehmomentübertragungselement (24a-b) aufweist, welches dazu vorgesehen ist, das Drehmomentaufnahmeelement (18a-b) mit dem Spannelement (16a-b) rotationsfest zu koppeln.

6. Werkzeugspannvorrichtung nach einem der vorhergehenden Ansprüche, **dadurch gekennzeichnet, dass** das Spannelement (16a-b) einen Verbindungsmechanismus (26a-b), insbesondere einen Klemmmechanismus zu der Herstellung der, insbesondere kraftschlüssigen, Verbindung mit der Überwurfmutter (12a-b) aufweist, welcher knarrenartig bedienbar ausgebildet ist.

7. Werkzeugspannvorrichtung nach Anspruch 6, **dadurch gekennzeichnet, dass** das Spannelement (16a-b) ein Umschaltelement (28a-b) aufweist, welches dazu vorgesehen ist, ein Umschalten zwischen zwei entgegengesetzten Spannrotationsrichtungen des knarrenartig bedienbaren Verbindungsmechanismus (26a-b) zu ermöglichen, wobei insbesondere das Drehmomentaufnahmeelement (18a-b) ein Betätigungselement (30a-b) umfasst, welches dazu vorgesehen ist, zumindest das Umschaltelement (28a-b) zu betätigen.

8. Werkzeugspannvorrichtung nach einem der vorhergehenden Ansprüche, **gekennzeichnet durch** zumindest eine Drehmomenterzeugungseinheit (32a-b), welche getrennt von dem Spannelement (16a-b) und/oder von dem Drehmomentaufnahmeelement (18a-b) ausgebildet ist und welche dazu vorgesehen ist, ein für den Werkzeugspannvorgang erforderliches Drehmoment zu erzeugen.

9. Werkzeugspannvorrichtung nach Anspruch 8, **gekennzeichnet durch** zumindest eine weitere Drehmomenterzeugungseinheit (34a-b), welche getrennt von der Drehmomenterzeugungseinheit (32a-b) ausgebildet ist.

10. Werkzeugspannvorrichtung nach Anspruch 9, **dadurch gekennzeichnet, dass** die Drehmomenterzeugungseinheit (32a-b) zu einem Vorspannen der Überwurfmutter (12a-b) vorgesehen ist und dass die weitere Drehmomenterzeugungseinheit (34a-b) zu einem Hauptspannen der Überwurfmutter (12a-b) vorgesehen ist.

11. Werkzeugspannvorrichtung nach einem der Ansprüche 9 oder 10,
**dadurch gekennzeichnet, dass** die weitere Drehmomenterzeugungseinheit (34a-b) ein, insbesondere pneumatisches oder hydraulisches, Hubelement (36a-b) zu einer Erzeugung eines linearen Hubs umfasst.

12. Werkzeugspannvorrichtung nach einem der Ansprüche 9 bis 11,
**gekennzeichnet durch** zumindest eine Verstelleinheit (38a-b), welche dazu vorgesehen ist, die weitere Drehmomenterzeugungseinheit (34a-b) entlang zumindest einer Raumrichtung, insbesondere zumindest einer Horizontalrichtung, zu verfahren.

13. Werkzeugspannvorrichtung nach einem der vorhergehenden Ansprüche,
**gekennzeichnet durch** zumindest eine vertikale Verstelleinheit (40a-b), welche zumindest dazu vorgesehen ist, ein vertikales Verfahren des Drehmomentaufnahmeelements (18a-b) zu erlauben.

14. Werkzeugeinstell- und/oder Werkzeugmessgerät (42a-b), welches zumindest zu einer Einstellung und/oder, vorzugsweise optischen, Vermessung eines in einem Werkzeugfutter (14a-b) eingespannten Werkzeugs (10a-b) vorgesehen ist, mit einer automatisierten, insbesondere vollautomatisierten, Werkzeugspannvorrichtung nach einem der vorhergehenden Ansprüche, und mit einem Vorsatzhalter (44a-b), welcher zumindest zu einer, insbesondere drehfesten, Aufnahme eines Werkzeugfutters (14a-b) vorgesehen ist, wobei insbesondere der Vorsatzhalter (44a-b) zumindest eine Kopplungseinheit (46a-b) aufweist, welche zu einer drehfesten Kopplung des Vorsatzhalters (44a-b) mit zumindest einer der Drehmomenterzeugungseinheiten (32a-b, 34a-b) der Werkzeugspannvorrichtung, vorgesehen ist.

15. Werkzeugeinstell- und/oder Werkzeugmessgerät (42a-b) nach Anspruch 14, **gekennzeichnet durch** eine Winkelsensoreinheit (48a-b), welche zumindest dazu vorgesehen ist, einen Drehwinkel, eine Drehrichtung und/oder eine Drehzahl des Vorsatzhalters (44a-b) zu sensieren.

16. Verfahren (110a-b) mit einer automatisierten Werkzeugspannvorrichtung, zumindest nach einem der vorhergehenden Ansprüche, wobei ein Werkzeug (10a-b) mittels eines Festziehens einer Überwurfmutter (12a-b) eines Werkzeugfutters (14a-b) in das Werkzeugfutter (14a-b) eingespannt oder mittels eines Lösens einer Überwurfmutter (12a-b) aus dem Werkzeugfutter (14a-b) ausgespannt wird, wobei ein Spannelement (16a-b) der Werkzeugspannvorrichtung mittels einer kraftschlüssigen Verbindung und/oder einer formschlüssigen Verbindung durch ein loses Aufsetzen mit der Überwurfmutter (12a-b) des Werkzeugfutters (14a-b) verbunden wird und wobei ein während eines Werkzeugspannvorgangs auftretendes Drehmoment zumindest zu einem Großteil von einem Drehmomentaufnahmeelement (18a-b) der Werkzeugspannvorrichtung aufgenommen wird, **dadurch gekennzeichnet, dass** das Drehmomentaufnahmeelement (18a-b) von dem Spannelement (16a-b) getrennt ausgebildet ist und wobei das Spannelement (16a-b) zumindest von dem Drehmomentaufnahmeelement (18a-b) entkoppelt bewegbar ist.

17. Verfahren zu einem automatisierten Einspannen eines Werkzeugs (10a-b) in ein, eine Überwurfmutter (12a-b) aufweisendes, Werkzeugfutter (14a-b) mittels einer Werkzeugspannvorrichtung nach einem der Ansprüche 1 bis 13 und/oder mittels eines Werkzeugeinstell- und/oder Werkzeugmessgeräts (42a-b) nach einem der Ansprüche 14 oder 15,
**dadurch gekennzeichnet, dass** die Überwurfmutter (12a-b) des Werkzeugfutters (14a-b) in zumindest einem Einspannschritt (52a-b) auf ein erstes Grenzdrehmoment angezogen wird und dass die Überwurfmutter (12a-b) des Werkzeugfutters (14a-b) in zumindest einem weiteren Einspannschritt (54a-b) auf ein zweites Grenzdrehmoment angezogen wird, wobei ein Drehmoment zu einem Anziehen der Überwurfmutter (12a-b) in den beiden Einspannschritten (52a-b, 54a-b) von voneinander getrennt ausgebildeten, automatisiert betriebenen Drehmomenterzeugungseinheiten (32a-b, 34a-b) erzeugt wird.

18. Verfahren nach Anspruch 17, **dadurch gekennzeichnet, dass** zumindest das erste Grenzdrehmoment und/oder zumindest das zweite Grenzdrehmoment von einer Steuer- und/oder Regeleinheit (22a-b) der Werkzeugspannvorrichtung vorgegeben und/oder überwacht wird, wobei insbesondere das zweite Grenzdrehmoment um ein Vielfaches, insbesondere zumindest um ein Dreifaches, vorzugsweise um ein Fünffaches, vorteilhaft um ein Siebenfaches, bevorzugt um ein Zehnfaches und besonders bevorzugt um ein 20-faches, größer ist als das erste Grenzdrehmoment.

19. Verfahren zu einem automatisierten Ausspannen eines Werkzeugs (10ab) aus einem, eine Überwurfmutter (12a-b) aufweisenden, Werkzeugfutter (14a-b) mittels einer Werkzeugspannvorrichtung nach einem der Ansprüche 1 bis 13 und/oder mittels eines Werkzeugeinstell- und/oder Werkzeugmessgeräts (42a-b) nach einem der Ansprüche 14 oder 15,
**dadurch gekennzeichnet, dass** die Überwurfmutter (12a-b) des Werkzeugfutters (14a-b) in zumindest einem Ausspannschritt (56a-b) automatisiert von einer weiteren Drehmomenterzeugungseinheit (34a-b) der Werkzeugspannvorrichtung um eine erste Anzahl Umdrehungen aufgedreht wird, dass die Überwurfmutter (12a-b) des Werkzeugfutters (14a-b) in zumindest einem weiteren Ausspannschritt (58a-b) automatisiert von einer Drehmomenterzeugungseinheit (32a-b) der Werkzeugspannvorrichtung, welche getrennt von der weiteren Drehmomenterzeugungseinheit (34a-b) ausgebildet ist, um eine zweite Anzahl Umdrehungen aufgedreht wird und dass die Gesamtzahl der Umdrehungen von der Drehmomenterzeugungseinheit (32a-b) und/oder von einer Winkelsensoreinheit (48a-b) der Werkzeugspannvorrichtung sensiert wird.

20. Verfahren nach Anspruch 19, **dadurch gekennzeichnet, dass** bei einem Unterschreiten eines Lösedrehmoments der Ausspannschritt (56a-b) beendet wird und der weitere Ausspannschritt (58a-b) gestartet wird und/oder dass der weitere Ausspannschritt (58a-b) gestoppt wird, sobald ein Grenzwert einer Gesamtzahl an Umdrehungen der Überwurfmutter (12a-b) überschritten wird, wobei insbesondere die Gesamtzahl an Umdrehungen durch eine Addition der sensierten ersten Anzahl Umdrehungen und der sensierten zweiten Anzahl Umdrehungen gebildet wird.

## Claims

1. Automated tool clamping device, which is configured for a clamping-in of at least one tool (10a-b) in a tool chuck (14a-b) by a tightening of a union nut (12a-b) of the tool chuck (14a-b) or for an unclamping of the tool (10a-b) from the tool chuck (14a-b) by loosening the union not (12a-b), with a clamping element (16a-b) which is at least configured to create a connection to the union nut (12a-b) of the tool chuck (14a-b), and with a torque receiving element (18a-b), which is at least configured to receive at least a large portion of a torque occurring during a tool clamping process, **characterised in that** the clamping element (16a-b) and the torque receiving element (18a-b) are implemented separately from each other in such a way that the clamping element (16a-b) is realized such that it can be loosely put onto the tool chuck (14a-b) and/or can be loosely removed from the tool chuck (14a-b),
and that the clamping element (16a-b) is movable at least while uncoupled from the torque receiving element (18a-b).

2. Tool clamping device according to claim 1,
**characterised in that** the clamping element (16a) is configured to create an at least largely force-fit connection to the union nut (12a) of the tool chuck (14a).

3. Tool clamping device according to claim 1 or 2,
**characterised in that** the torque receiving element (18a-b) comprises a torque sensor (20a-b).

4. Tool clamping device according to one of the preceding claims,
**characterised by** at least one control and/or regulation unit (22a-b), which is configured to control and/or regulate a progression of a torque that is exerted onto the union nut (12a-b) by the tool clamping device during the tool clamping process, and/or to set at least a maximum torque that is exerted onto the union nut (12a-b) by the tool clamping device during the tool clamping process.

5. Tool clamping device according to one of the preceding claims,
**characterised in that** the torque receiving element (18a-b) comprises at least one torque transfer element (24a-b) which is configured for coupling the torque receiving element (18a-b) with the clamping element (16a-b) in a rotationally fixed manner.

6. Tool clamping device according to one of the preceding claims,
**characterised in that** the clamping element (16a-b) comprises a connection mechanism (26a-b), in particular a clamping mechanism, for creating the - in particular force-fit - connection with the union nut (12a-b), said connection mechanism (26a-bb) being implemented so as to be operable in a ratchet-like manner.

7. Tool clamping device according to claim 6,
**characterised in that** the clamping element (16a-b) comprises a switch element (28a-b), which is configured to permit switching between two opposed rotational tension directions of the ratchet-like operable connection mechanism (26a-b), wherein in particular the torque receiving element (18a-b) comprises an actuation element (30a-b), which is configured to actuate at least the switch element (28a-b).

8. Tool clamping device according to one of the preceding claims,
**characterised by** at least one torque generating unit (32a-b), which is realized separately from the clamping element (16a-b) and/or from the torque receiving element (18a-b) and which is configured to generate a torque that is required for the tool clamping process.

9. Tool clamping device according to claim 8,
**characterised by** at least one further torque generating unit (34a-b), which is realized separately from the torque generating unit (32a-b).

10. Tool clamping device according to claim 9,
**characterised in that** the torque generating unit (32a-b) is configured for a pre-tensioning of the union nut (12a-b) and that the further torque generating unit (34a-b) is configured for a main tensioning of the union nut (12a-b).

11. Tool clamping device according to one of claims 9 or 10,
**characterised in that** the further torque generating unit (34a-b) comprises an, in particular pneumatic or hydraulic, stroke element (36a-b) for generating a linear stroke.

12. Tool clamping device according to one of claims 9 to 11,
**characterised by** at least one adjustment unit (38a-b), which is configured for traversing the further torque generating unit (34a-b) along at least one spatial direction, in particular along at least one horizontal direction.

13. Tool clamping device according to one of the preceding claims,
**characterised by** at least one vertical adjustment unit (40a-b), which is at least configured to permit vertical traversing of the torque receiving element (18a-b).

14. Tool presetting and/or tool measuring apparatus (42a-b), which is configured at least for a presetting and/or a, preferably optical, measuring of a tool (10a-b) that is clamped in a tool chuck (14a-b), with an automated, in particular fully automated, tool clamping device according to one of the preceding claims, and with an attachment holder (44a-b) which is configured at least for an, in particular rotationally fixed, accommodation of a tool chuck (14a-b),
wherein in particular the attachment holder (44a-b) comprises at least one coupling unit (46a-b) which is configured for a rotationally fixed coupling of the attachment holder (44a-b) with at least one of the torque generating units (32a-b, 34a-b) of the tool clamping device.

15. Tool presetting and/or tool measuring apparatus (42a-b) according to claim 14,
**characterised by** an angle sensor unit (48a-b), which is at least configured to detect a rotation angle, a rotation direction and/or a rotation speed of the attachment holder (44a-b).

16. Method (110a-b) with an automated tool clamping device at least according to one of the preceding claims, wherein a tool (10a-b) is clamped into a tool chuck (14a-b) by a tightening of a union nut (12a-b) of the tool chuck (14a-b), or is unclamped from the tool chuck (14a-b) by a release of a union nut (12a-b), wherein a clamping element (16a-b) of the tool clamping device is connected to the union nut (12a-b) of the tool chuck (14a-b) by means of a force-fit connection and/or a form-fit connection via loosely putting said clamping element (16a-b) onto the union nut (12a-b),
and wherein a torque occurring during the tool clamping process is received at least to a large extent by a torque receiving element (18a-b) of the tool clamping device, **characterised in that** the torque receiving element (18a-b) is realized separately from the clamping element (16a-b) and the clamping element (16a-b) is movable at least while uncoupled from the torque receiving element (18a-b).

17. Method for an automated clamping-in of a tool (10a-b) into a tool chuck (14a-b) having a union nut (12a-b) by means of a tool clamping device according to one of claims 1 to 13 and/or by means of a tool presetting and/or tool measuring apparatus (42a-b) according to one of claims 14 or 15,
**characterised in that** in at least one clamping-in step (52a-b) the union nut (12a-b) of the tool chuck (14a-b) is tightened to a first limit torque, and that in at least one further clamping-in step (54a-b) the union nut (12a-b) of the tool chuck (14a-b) is tightened to a second limit torque,
wherein a torque for a tightening of the union nut (12a-b) in the two clamping-in steps (52a-b, 54a-b) is generated by torque generating units (32a-b, 34a-b) which are realized separately from each other and are operated in an automated manner.

18. Method according to claim 17,
**characterised in that** at least the first limit torque and/or at least the second limit torque are/is predetermined and/or monitored by a control and/or regulation unit (22a-b) of the tool clamping device,
wherein in particular the second limit torque is many times greater than the first limit torque, in particular at least three times as great, preferably five times as great, advantageously seven times as great, preferentially ten times as great and particularly preferentially twenty times as great as the first limit torque.

19. Method for an automated unclamping of a tool (10a-b) from a tool chuck (14a-b) having a union nut (12a-b) by means of a tool clamping device according to one of claims 1 to 13 and/or by means of a tool presetting and/or tool measuring apparatus (42a-b) according to one of claims 14 or 15,
**characterised in that** in at least one unclamping step (56a-b) the union nut (12a-b) of the tool chuck (14a-b) is unwound by a first number of rotations in an automated manner by means of a further torque generating unit (34a-b) of the tool clamping device,
that in at least one further unclamping step (58a-b) the union nut (12a-b) of the tool chuck (14a-b) is unwound by a second number of rotations in an automated manner by means of a torque generating unit (32a-b) of the tool clamping device, which is realized separately from the further torque generating unit (34a-b),
and that the total number of rotations is captured by the torque generating unit (32a-b) and/or by an angle sensor unit (48a-b) of the tool clamping device.

20. Method according to claim 19,
**characterised in that** if a release torque is fallen short of, the unclamping step (56a-b) is terminated and the further unclamping step (58a-b) is started, and/or that the further unclamping step (58a-b) is terminated as soon as a limit value of a total number of rotations of the union nut (12a-b) is exceeded,
wherein in particular the total number of rotations is obtained by adding the captured first number of rotations and the captured second number of rotations..

## Revendications

1. Dispositif de serrage d'outil automatisé,
qui est prévu pour serrer au moins un outil (10a-b) dans un mandrin porte-outil (14a-b) par resserrage d'un écrou-raccord (12a-b) du mandrin porte-outil (14a-b), ou pour desserrer l'outil (10a-b) du mandrin porte-outil (14a-b) par relâchement de l'écrou-raccord (12a-b),
avec un élément de serrage (16a-b) qui est au moins prévu pour établir un raccordement avec l'écrou-raccord (12a-b) du mandrin porte-outil (10a-b) et avec un élément recevant-couple (18a-b) qui est au moins prévu pour recevoir au moins une grande partie d'un moment de torsion se produisant pendant un procès de serrage d'outil,
**caractérisé en ce que** l'élément de serrage (16a-b) et l'élément recevant-couple (18a-b) sont réalisés séparément l'un de l'autre en sorte que l'élément de serrage (16a-b) soit implémenté d'une telle manière qu'il puisse être mis sur le mandrin porte-outil (14a-b) ou peut être enlevé du mandrin porte-outil (14a-b) lâchement et que l'élément de serrage (16a-b) peut être mû au moins en état découplé de l'élément recevant-couple (18a-b).

2. Dispositif de serrage d'outil selon la revendication 1,
**caractérisé en ce que** l'élément de serrage (16a) est prévu pour engendrer un raccordement au moins largement en liaison de force avec l'écrou-raccord (12a) du mandrin porte-outil (14a).

3. Dispositif de serrage d'outil selon l'une des revendications 1 ou 2,
**caractérisé en ce que** l'élément recevant-couple (18a-b) comprend un capteur de couple (20a-b).

4. Dispositif de serrage d'outil selon l'une des revendications précédentes,
**caractérisé par** au moins une unité de commande et/ou de régulation (22a-b) qui est prévue pour commander et/ou réguler une progression d'un couple exercé dans le procès de serrage d'outil sur l'écrou-raccord (12a-b) par le dispositif de serrage d'outil, et/ou pour un réglage au moins d'un couple maximal exercé sur l'écrou-raccord (12a-b) dans le procès de serrage par le dispositif de serrage d'outil.

5. Dispositif de serrage d'outil selon l'une des revendications précédentes,
**caractérisé en ce que** l'élément recevant-couple (18a-b) comprend au moins un élément de transfert de couple (24a-b) qui est prévu pour un couplage fixé en rotation de l'élément recevant-couple (18a-b) avec l'élément de serrage (16a-b).

6. Dispositif de serrage d'outil selon l'une des revendications précédentes,
**caractérisé en ce que** l'élément de serrage (16a-b) comprend un mécanisme de raccordement (26a-b), en particulier un mécanisme de serrage, pour engendrer le raccordement, en particulier le raccordement en liaison par adhérence, avec l'écrou-raccord (12a-b), qui est réalisé à être maniable en façon de cliquet.

7. Dispositif de serrage d'outil selon la revendication 6,
**caractérisé en ce que** l'élément de serrage (16a-b) comprend un élément de changement (28a-b) prévu pour permettre un changement entre deux directions de rotation-serrage opposées du mécanisme de raccordement (26a-b) qui est maniable en façon de cliquet, où en particulier l'élément recevant-couple (18a-b) comprend un élément de maniement (30a-b) qui est prévu pour manier au moins l'élément de changement (28a-b).

8. Dispositif de serrage d'outil selon l'une des revendications précédentes,
**caractérisé par** au moins une unité de génération de couple (32a-b) qui est réalisée séparément de l'élément de serrage (16a-b) et/ou de l'élément recevant-couple (18a-b) et qui est prévu pour générer un couple requis pour le procès de serrage d'outil.

9. Dispositif de serrage d'outil selon la revendication 8,
**caractérisé par** au moins une autre unité de génération de couple (34a-b) qui est réalisée séparément de l'unité de génération de couple (32a-b).

10. Dispositif de serrage d'outil selon la revendication 9,
**caractérisé en ce que** l'unité de génération de couple (32a-b) est prévue pour un pré-serrage l'écrou-raccord (12a-b) et que l'autre unité de génération de couple (34a-b) est prévue pour le serrage principal de l'écrou-raccord (12a-b).

11. Dispositif de serrage d'outil selon l'une des revendications 9 ou 10,
**caractérisée en ce que** l'autre unité de génération de couple (34a-b) comprend un élément de course (36a-b), en particulier un élément de course (36a-b) pneumatique ou hydraulique, pour générer une course linéaire.

12. Dispositif de serrage d'outil selon l'une des revendications 9 à 11,
**caractérisé par** au moins une unité d'ajustement (38a-b) prévue pour déplacer l'autre unité de génération de couple (34a-b) le long d'au moins une direction spatiale, en particulier d'au moins une direction horizontale.

13. Dispositif de serrage d'outil selon l'une des revendications précédentes,
**caractérisé par** au moins une unité d'ajustement verticale (40a-b) qui est au moins prévue pour permettre un déplacement vertical de l'élément recevant-couple (18a-b).

14. Appareil de réglage et/ou de mesure d'outil (42a-b) prévu au moins pour un réglage et/ou mesure, préferrement mesure optique, d'un outil (10a-b) serré dans un mandrin porte-outil (14a-b),
avec un dispositif de serrage d'outil automatisé, en particulier entièrement automatisé, selon l'une des revendications précédentes,
et avec un support d'attachement (44a-b) qui est prévu pour un logement, en particulier un logement de façon fixe en rotation, d'un mandrin porte-outil (14a-b),
où en particulier le support d'attachement (44a-b) comprend au moins une unité de couplage (46a-b) qui est prévue pour un couplage de façon immobile en rotation du support d'attachement (44a-b) avec au moins une des unités de génération de couple (32a-b, 34a-b) du dispositif de serrage d'outil.

15. Appareil de réglage et/ou de mesure d'outil (42a-b) selon la revendication 14,
**caractérisé par** une unité de capteur d'angle (48a-b) qui est prévue au moins pour capter un angle de rotation, un sens de rotation et/ou une vitesse de rotation du support d'attachement (44a-b).

16. Procédé (110a-b) avec un dispositif de serrage d'outil automatisé, au moins selon l'une des revendications précédentes,
où un outil (10a-b) est enserré dans un mandrin porte-outil (14a-b) par le biais d'un resserrage d'un écrou-raccord (12a-b) du mandrin porte-outil (14a-b) ou
est desserré du mandrin porte-outil (14a-b) par le biais d'un relâchement d'un écrou-raccord (12a-b),
où un élément de serrage (16a-b) du dispositif de serrage d'outil est raccordé avec l'écrou-raccord (12a-b) du mandrin porte-outil (14a-b) par un raccordement en liaison de force et/ou par une liaison en forme en mettant lâchement l'écrou-raccord (12a-b) et
où un couple se produisant pendant un procès de serrage d'outil est reçu au moins largement par un élément recevant-couple (18a-b) du dispositif de serrage d'outil, **caractérisé en ce que** l'élément recevant-couple (18a-b) est réalisé séparément de l'élément de serrage (16a-b), où l'élément de serrage (16a-b) est mouvable au moins en étant découplé de l'élément recevant-couple (18a-b).

17. Procédé pour enserrage automatisé d'un outil (10a-b) dans un mandrin porte-outil (14a-b) comprenant un écrou-raccord (12a-b) par le biais d'un dispositif de serrage d'outil selon l'une des revendications 1 à 13 et/ou par le biais d'un appareil de réglage et/ou de mesure d'outil (42a-b) selon l'une des revendications 14 ou 15, **caractérisé en ce que** l'écrou-raccord (12a-b) du mandrin porte-outil (14a-b) est resserré à un premier couple limite dans au moins une étape d'enserrage (52a-b) et que l'écrou-raccord (12a-b) du mandrin porte-outil (14a-b) est resserré à un deuxième couple limite dans au moins une autre étape d'enserrage (54a-b),
où un couple pour le resserrage de l'écrou-raccord (12a-b) dans les deux étapes d'enserrage (52a-b, 54a-b) est généré par des unités de génération de couple (32a-b, 34a-b) qui sont réalisées séparées l'une de l'autre et sont opérées de façon automatisée.

18. Procédé selon la revendication 17,
**caractérisé en ce que** au moins le premier couple limite et/ou au moins le deuxième couple limite est/sont prédéfini/s et/ou surveillé/s par une unité de commande et/ou de régulation (22a-b) du dispositif de serrage d'outil,
où en particulier le deuxième couple limite est supérieur par un multiple, en particulier au moins trois fois, avantageusement sept fois, de préférence dix fois et particulièrement de préférence vingt fois supérieur au premier couple limite.

19. Procédé pour desserrage automatisé d'un outil (10a-b) d'un mandrin porte-outil (14a-b) comprenant un écrou-raccord (12a-b) par le biais d'un dispositif de serrage d'outil selon l'une des revendications 1 à 13 et/ou par le biais d'un appareil de réglage et/ou de mesure d'outil (42a-b) selon l'une des revendications 14 ou 15, **caractérisé en ce que** l'écrou-raccord (12a-b) du mandrin porte-outil (14a-b) est desserré de façon automatisée par un premier nombre de tours par le biais d'une autre unité de génération de couple (34a-b) du dispositif de serrage d'outil dans au moins une étape de desserrage (56a-b),
que l'écrou-raccord (12a-b) du mandrin porte-outil (14a-b) est desserré de façon automatisée par un deuxième nombre de tours par le biais d'une unité de génération de couple (32a-b) du dispositif de serrage d'outil - qui est réalisée séparément de l'autre unité de génération de couple (34a-b) -dans au moins une autre étape de desserrage (58a-b)
et que le nombre total de tours est capté par l'unité de génération de couple (32a-b) et/ou par une unité de captage d'angle (48a-b) du dispositif de serrage d'outil.

20. Procédé selon la revendication 19,
**caractérisé en ce que** si un couple de relâchement est sous-dépassé, l'étape de desserrage (56a-b) est terminée et l'autre étape de desserrage (58a-b) est démarrée
et/ou que l'autre étape de desserrage (58a-b) est terminée dès que une valeur limite d'un nombre total de tours de l'écrou-raccord (12a-b) soit dépassé,
où en particulier le nombre total de tours est calculé par une addition du premier nombre de tours capté et du deuxième nombre de tours capté.
